# EUROPEAN PATENT APPLICATION

(11) **EP 4 700 523 A1**
(43) Date of publication of application: **25.02.2026**
(21) Application number: 24792625.6
(22) Date of filing: 15.04.2024
(51) Int. Cl.: G05D 1/224, G05D 1/648

(54) **REMOTE DEVICE AND REMOTE OPERATION SYSTEM**

(30) Priority: 20.04.2023 JP 2023069272
(71) Applicant: KUBOTA CORPORATION, Osaka-shi, Osaka 556-8601 (JP)
(72) Inventor: FUJII Takafumi, Sakai-shi, Osaka 590-0908 (JP)
(74) Representative: Cabinet Beau de Loménie
(86) International application number: PCT/JP2024/014953
(87) International publication number: WO 2024/219350

(57) **Abstract**

Remote manipulation is assisted (supported).

A remote device (30) includes a remote manipulator (35) to remotely manipulate a working vehicle (1), a memory and/or a storage (32) to store an actual travel route which is a past record of travel of the working vehicle (1), a display (34) to display an image of an area in a direction of travel of the working vehicle (1) captured during remote manipulation, and a controller (31) configured or programmed to cause the display (34) to display the actual travel route stored in the memory and/or the storage (32) at least during remote manipulation of the working vehicle (1).

## Description

### Technical Field

The present invention relates to remote devices and remote manipulation systems to remotely manipulate working vehicles.

### Background Art

For example, Patent Literature 1 discloses an operation supporting system for a working vehicle capable of selecting a desired one of a plurality of past working routes. The operation supporting system includes a server to store working routes of the working vehicle as work history information via communication with the working vehicle, and a terminal device communicable with the working vehicle in a work region of the working vehicle. The server stores the work history information associated with a work region identifier and a operator identifier. The terminal device, upon receiving the work history information from the server, displays the plurality of past working routes in a selectable manner.

### Citation List

### Patent Literature

PTL 1: Japanese Patent No. 7047015

### Summary of Invention

### Technical Problem

The operation supporting system of Patent Literature 1 is configured to automatically operate the working vehicle along the desired route selected from the plurality of past working routes, and not configured to remotely operate the working vehicle by performing remote manipulation. Therefore, the operation supporting system cannot support remote manipulation.

In view of the above issue, it is an object of the present invention to provide a remote device and a remote manipulation system to support remote manipulation.

### Solution to Problem

The technical solutions of the present invention to achieve the above-described technical object include the following features.

A remote device according to an example embodiment of the present invention includes a remote manipulator to remotely manipulate a working vehicle, a display to display an image of an area in a direction of travel of the working vehicle captured during remote manipulation, and a controller configured or programmed to cause the display to display actual travel information at least during remote manipulation of the working vehicle.

The actual travel information may include information indicating a route actually traveled in a past by the working vehicle manually operated or automatically operated.

The actual travel information may be not information relating to a route and manipulation of the working vehicle remotely manipulated currently by a human remote manipulator, but may be information relating to a route and manipulation relating to another vehicle other than the working vehicle remotely manipulated currently.

The information relating to a route and manipulation relating to a manual operation included in the actual travel information may be information relating to a route and manipulation obtained when the other vehicle was manually operated by a driver in the other vehicle or when the other vehicle was remotely operated manually by the human remote manipulator not in the other vehicle.

The display may be operable to display the captured image on a remote operation screen. The controller may be configured or programmed to display a path in a superimposed manner on the captured image on the remote operation screen, the path being an actual travel route which was passed by the manual operation and which is included in the actual travel information.

The remote device may include a memory and/or a storage to store one or more pieces of the actual travel information. The controller may be configured or programmed to, based on a selection instruction from the human remote manipulator, select one of the one or more pieces of actual travel information stored in the memory and/or the storage and cause the display to display, as the path, a route indicated by the selected one of the one or more pieces of actual travel information on the remote operation screen.

The remote device may include a memory and/or a storage to store one or more pieces of the actual travel information and a communicator to receive position information relating to the working vehicle and the captured image. Each of the one or more pieces of actual travel information may include information in which manipulation information obtained when the working vehicle or the other vehicle was actually operated and position information relating to the working vehicle or the other vehicle are associated with each other. The controller may be configured or programmed to, when the remote manipulator remotely manipulates the working vehicle, select, from the memory and/or the storage, one of the one or more pieces of actual travel information that is associated with a target range including a position indicated by current position information relating to the working vehicle received by the communicator, and cause the display to display, as the path, the actual travel route indicated by the selected one of the one or more pieces of actual travel information on the remote operation screen.

The captured image may be an image of the area in the direction of travel of the working vehicle captured by an imager provided inside or outside a protection structure surrounding an operator's seat provided on the working vehicle.

The remote device may include a memory and/or a storage to store one or more pieces of the actual travel information including respective one or more actual travel routes. The controller may be configured or programmed to select one of the one or more actual travel routes stored in the memory and/or the storage based on priority information, and cause the display to display the selected one of the one or more actual travel routes as the path on the remote operation screen.

The memory and/or the storage may be operable to store a plurality of the pieces of actual travel information. The controller may be configured or programmed to cause the display to display a latest one of the plurality of pieces of actual travel information stored in the memory and/or the storage as a first path with a first transparency level, and cause the display to display, on the remote operation screen, one or more of the plurality of pieces of actual travel information that are other than the latest one of the plurality of pieces of actual travel information as a second path with a second transparency level, the second transparency level being higher than the first transparency level.

A remote manipulation system according to an example embodiment of the present invention includes a working vehicle and a remote device, wherein the working vehicle includes a position detector to detect a position of the working vehicle, an imager to capture an image of an area in a direction of travel of the working vehicle, and an in-vehicle communicator to transmit position information indicating the position detected by the position detector and the captured image captured by the imager such that the position information and the captured image are associated with each other, the remote device includes a communicator to receive the position information and the captured image, and the controller is configured or programmed to cause the display to display actual travel information at least during remote manipulation of the working vehicle.

### Advantageous Effects of Invention

The present invention makes it possible to support remote manipulation.

### Brief Description of Drawings

[FIG. 1] FIG. 1 is a block diagram of a remote manipulation system of an example embodiment of the present invention.
[FIG. 2] FIG. 2 is a side view of a tractor which is an example of a working vehicle.
[FIG. 3] FIG. 3 illustrates an example of correspondence data.
[FIG. 4A] FIG. 4A illustrates an example of a storage table of a storing device.
[FIG. 4B] FIG. 4B illustrates an example of a storage table of a second variation.
[FIG. 5] FIG. 5 illustrates an example of an actual travel route on a farm road, and a planned travel route and an actual travel route on an agricultural field.
[FIG. 6] FIG. 6 illustrates an example of actual travel information.
[FIG. 7A] FIG. 7A illustrates an example of a remote operation screen.
[FIG. 7B] FIG. 7B illustrates an example of a remote operation screen.
[FIG. 7C] FIG. 7C illustrates an example of a remote operation screen.
[FIG. 7D] FIG. 7D illustrates an example of a remote operation screen.
[FIG. 7E] FIG. 7E illustrates a fourth variation of a remote operation screen.
[FIG. 8] FIG. 8 illustrates an example of a display style table stored in a storing device.
[FIG. 9A] FIG. 9A illustrates an example of a selection screen of a display.
[FIG. 9B] FIG. 9B illustrates an example of a selection screen of a display.
[FIG. 9C] FIG. 9C illustrates an example of a selection screen of a display.
[FIG. 10A] FIG. 10A is a flowchart showing operations of a working vehicle while the working vehicle is remotely operated.
[FIG. 10B] FIG. 10B is a flowchart showing operations and the like of a remote device when a working vehicle is remotely manipulated.
[FIG. 10C] FIG. 10C is a flowchart of a first variation showing operations and the like of a remote device when a working vehicle is remotely manipulated.
[FIG. 10D] FIG. 10D is a flowchart of a second variation showing operations and the like of a remote device when a working vehicle is remotely manipulated.
[FIG. 10E] FIG. 10E is a flowchart of a third variation showing operations and the like of a remote device when a working vehicle is remotely manipulated.
[FIG. 11A] FIG. 11A illustrates an example of a remote operation screen of a fifth variation.
[FIG. 11B] FIG. 11B illustrates an example of a remote operation screen of the fifth variation.
[FIG. 12] FIG. 12 illustrates an example of a remote operation screen of a sixth variation.

### Description of Embodiments

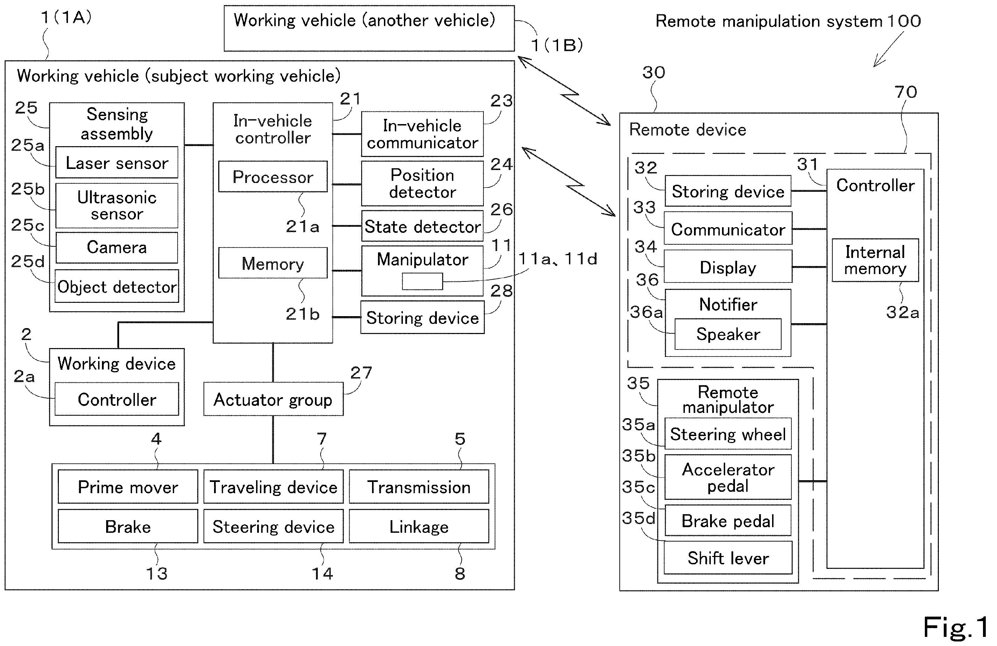

FIG. 1 is a block diagram of a remote manipulation system 100 of an example embodiment of the present invention. The remote manipulation system 100 includes a working vehicle 1 and a remote device 30. The remote manipulation system 100 and the remote device 30 are configured to remotely manipulate (or remotely control) the working vehicle 1 and remotely monitor the working vehicle 1. The working vehicle 1 is an agricultural field machine (also referred to a "remotely manipulated agricultural machine") that can be remotely operated (for example, remote travel, remote work, and the like) by the remote device 30. The working vehicle 1 is a tractor, for example. The tractor is an example of agricultural machines to perform agricultural work in an agricultural field. It is noted that the working vehicle 1 may be an agricultural machine other than the tractor, a construction machine or a working machine.

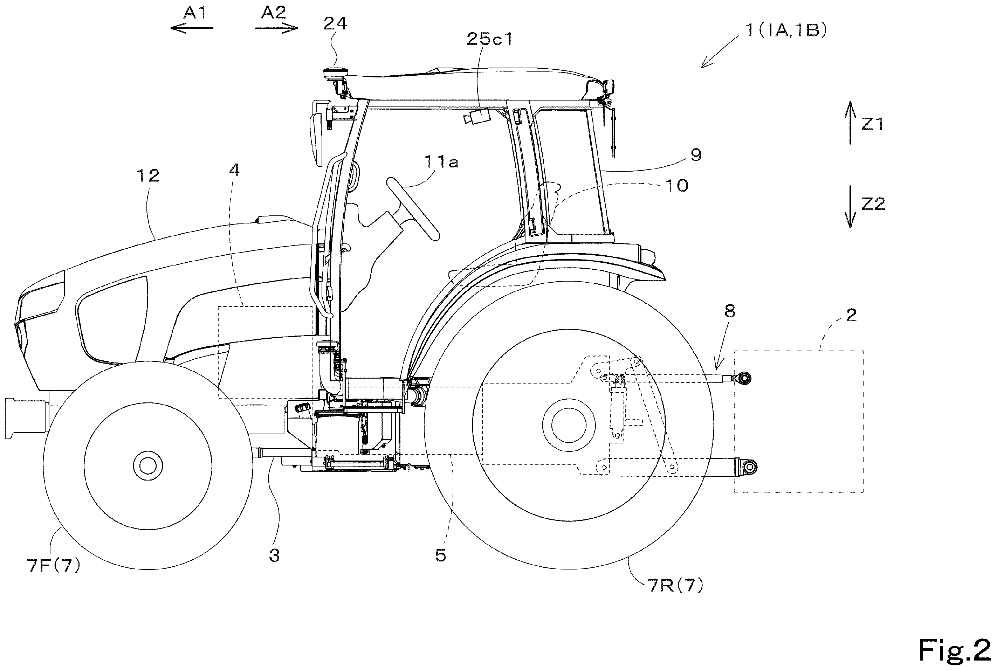

FIG. 2 is a side view of a tractor which is an example of the working vehicle 1. The working vehicle 1 includes a vehicle body 3. The vehicle body 3 is provided with a traveling device 7. The traveling device 7 includes front wheels 7F and rear wheels 7R on the left and right sides of the vehicle body 3 and supports the vehicle body 3 such that the vehicle body 3 is allowed to travel. The traveling device 7 may be a crawler traveling device.

The vehicle body 3 is provided with a prime mover 4, a transmission 5, a brake 13 (FIG. 1) and a steering device 14 (FIG. 1). The prime mover 4 includes an engine (diesel engine, gasoline engine), an electric motor and/or the like. The transmission 5, for example, changes speed stages to change the driving force of the traveling device 7 and switch between forward travel and backward travel of the traveling device 7. The brake 13 brakes the vehicle body 3. The steering device 14 steers the vehicle body 3.

A cabin 9, which is an example of a protection structure, is provided on an upper portion of the vehicle body 3. An operator's seat 10 and a manipulator 11 are provided inside the cabin 9. The working vehicle 1 is a tractor configured to be able to travel (operate) alone and perform work using a working device 2, but is also configured to allow an operator seated in the operator's seat 10 to operate the manipulator 11 to cause the working vehicle 1 to travel and perform work using the working device 2. The cabin 9 protects the operator's seat 10 by surrounding the front, rear, top, left and right sides of the operator's seat 10. The protection structure is not limited to the cabin 9, and may be a rollover protection structure (ROPS) or the like.

The direction indicated by an arrow A1 in FIG. 2 is the forward direction with respect to the working vehicle 1. The direction indicated by an arrow A2 is the rearward direction with respect to the working vehicle 1. The direction indicated by an arrow Z1 is the upward direction with respect to the working vehicle 1. The direction indicated by an arrow Z2 is the downward direction with respect to the working vehicle 1. Directions perpendicular to the arrows A1, A2, Z1 and Z2 are the width directions (left-right directions) with respect to the working vehicle 1. The near side in FIG. 2 is the left side of the working vehicle 1, and the far side in FIG. 2 is the right side of the working vehicle 1.

The vehicle body 3 is provided with a linkage at the rear portion thereof. The linkage 8 includes a three-point linkage and/or the like. The linkage 8 is configured to attach and detach the working device 2 (such as an implement) thereto and therefrom. When the working device 2 is connected to the linkage 8 and the working vehicle 1 (vehicle body 3) is caused to travel by driving the traveling device 7, the working vehicle 1 can tow the working device 2. Furthermore, the linkage 8 is configured to raise and lower the working device 2, and change the position of the working device 2.

Examples of the working device 2 include tillers to perform tillage, fertilizer spreaders to spread fertilizer, agricultural chemical spreaders to spread agricultural chemicals, harvesters to harvest, mowers to mow grass or the like, tedders to ted grass or the like, rakes to rake grass or the like, and balers to bale grass or the like. Each of these devices is attachable to and detachable from the working vehicle 1 via the linkage 8. The working vehicle 1 performs agricultural work for the agricultural field using the working device 2.

A hood 12 is provided in front of the cabin 9. The hood 12 is attached to the vehicle body 3. A storage room is defined between the hood 12 and the vehicle body 3. The storage room stores a cooling fan, a radiator, a battery and/or the like as well as the prime mover 4.

As shown in FIG. 1, the working vehicle 1 includes an in-vehicle controller 21, an in-vehicle communicator 23, a position detector 24, a sensing assembly 25, a state detector 26, a storing device (memory and/or storage) 28, a manipulator 11, an actuator group 27, the prime mover 4, the traveling device 7, the transmission 5, the brake 13, the steering device 14 and the linkage 8. The working vehicle 1 includes an in-vehicle network such as CAN, LIN and/or FlexRay. The in-vehicle controller 21 is electrically connected to the in-vehicle communicator 23, the position detector 24, the sensing assembly 25, the state detector 26, the storing device 28, the manipulator 11, the actuator group 27, the working device 2 connected to the working vehicle 1, and/or the like via the in-vehicle network.

The in-vehicle controller 21 includes an electronic control unit (ECU) including a processor 21a and a memory 21b. The in-vehicle controller 21 is configured or programmed to control operations of elements of the working vehicle 1. The memory 21b includes volatile or nonvolatile memory and/or the like. The memory 21b of the in-vehicle controller 21 stores various information and data for the in-vehicle controller 21 to control operations of elements of the working vehicle 1 in a read/write manner. The storing device 28 is, for example, a solid state drive (SSD), a hard disc drive (HDD) and/or the like, and stores actual travel information (described later).

The in-vehicle communicator 23 includes an antenna, an integrated circuit (IC), an electronic circuit and the like to communicate wirelessly via a cellular phone network, the Internet or wireless LAN. The in-vehicle controller 21 communicates wirelessly with the remote device 30 via the in-vehicle communicator 23. The in-vehicle controller 21 includes a real-time clock (RTC) to measure date and time.

Although the present example embodiment discusses examples in which the working vehicle 1 and the remote device 30 communicate with each other via a cellular phone network or the like, for another example, the working vehicle 1 and the remote device 30 may communicate with each other via a cellular phone network or the like and an external device such as a server or a repeater. The working vehicle 1 and the remote device 30 may communicate with each other directly using near field wireless signals such as Bluetooth (registered trademark) low energy (BLU) signals or ultra high frequency (UHF) signals, for example. In this case, the in-vehicle communicator 23 and the remote device 30 each only need to include an interface for near field communication.

The position detector 24 is provided at an upper portion of the cabin 9 (FIG. 2), for example. It is noted that the position at which the position detector 24 is provided is not limited to the upper portion of the cabin 9, may be another position in or on the vehicle body 3 or a predetermined position in or on the working device 2. The position detector 24 detects the position thereof (measured position information including latitude and longitude) using a satellite positioning system. Specifically, the position detector 24 receives signals transmitted from positioning satellite(s) (positions of positioning satellites, time of transmission, corrective information, etc.) to detect the position thereof based on the signals. The position detector 24 may detect, as the position thereof, the position which has been corrected based on signal(s) for correction transmitted from a base station (reference station) capable of receiving signals from positioning satellites.

The position detector 24 may include an inertial measurement unit such as a gyroscope and/or an acceleration sensor. In this case, the position detector 24 may correct the position (latitude and longitude) detected based on signals received from positioning satellites using the inertial measurement unit to detect the corrected position as the position thereof. The position detector 24 uses the detected position thereof as the position of the working vehicle 1. The position detector 24 may calculate the position of the working vehicle 1 based on the detected position thereof and prestored outline information relating to the working vehicle 1. The position detector 24 may calculate the position of the working device 2 based on the detected position thereof, the prestored outline information relating to the working device 2, and the attached position of the working device 2 with respect to the vehicle body 3.

The sensing assembly 25 is configured to sense (monitor) the surrounding area of the working vehicle 1. Specifically, the sensing assembly 25 includes laser sensor(s) 25a, ultrasonic sensor(s) 25b, camera(s) 25c and object detector(s) 25d. For example, the sensing assembly 25 includes a plurality of the laser sensors 25a and a plurality of the ultrasonic sensors 25b. The plurality of laser sensors 25a and the plurality of ultrasonic sensors 25b are provided at predetermined positions such as a front portion, a rear portion, left and right portions and/or the like of the working vehicle 1, and detect situations in the surrounding area including the front, rear, left and right sides and/or the like of the working vehicle 1 and objects in the surrounding area. For example, the laser sensors 25a and the ultrasonic sensors 25b are provided at predetermined positions in or on the vehicle body 3 such that objects within a predetermined target detection distance from the working vehicle 1 and positioned lower than the vehicle body 3 can also be detected.

The laser sensors 25a and the ultrasonic sensors 25b are examples of object sensors. It is noted that at least one of (i) the plurality of laser sensors 25a or (ii) the plurality of ultrasonic sensors 25b may be provided in the sensing assembly 25 as the object sensors. A plurality of other object sensors may be provided in the sensing assembly 25.

Each laser sensor 25a includes an optical sensor such as a light detection and ranging (LiDAR) sensor. Each laser sensor 25a applies pulsed measuring light (laser light) several million times per second from a light source such as a laser diode, and scans the measuring light in the horizontal direction or the vertical direction by reflecting the measuring light with a rotatable mirror to project the light onto a predetermined detection range (sensing range). Then, the laser sensor 25a receives the measuring light reflected by an object at light receiver(s).

Each object detector 25d includes an electronic circuit, an IC and/or the like to detect the presence or absence of objects, the positions of objects, the types of objects and/or the like based on light reception signals output from the light receiver of the laser sensor 25a. The object detector 25d detects the distance to an object based on the time from emission of measuring light from the laser sensor 25a to reception of the reflected light by the laser sensor 25a (time of flight (TOF) method). The objects detected by the object detectors 25d include a worksite where the working vehicle 1 travels and performs work, an agricultural field, crops in an agricultural field, the ground, road surface, and other objects, people and so on.

Each ultrasonic sensor 25b includes an aerial ultrasonic sensor such as sonar. The ultrasonic sensor 25b transmits measuring waves (ultrasonic waves) to a predetermined detection range via a transmitter, and receives, at a receiver, reflected waves which are the measuring waves reflected by an object. The object detector 25d detects the presence or absence of objects, the positions of objects, types of objects and/or the like based on signals output from the receiver of the ultrasonic sensor 25d. The object detector 25d detects the distance to an object based on the time from emission of measuring waves by the ultrasonic sensor 25b to reception of the reflected waves by the ultrasonic sensor 25b (TOF method).

Each camera 25c includes a charge coupled devices (CCD) camera including a CCD image sensor, a complementary metal oxide semiconductor (CMOS) camera including a CMOS image sensor, and/or the like. The cameras 25c are provided at predetermined portions such as the front portion, rear portion, left and right portions of the working vehicle 1, inside the cabin 9 and the like as shown in FIG. 2, capture images of the surrounding area including the front, rear, left and right sides and the like of the working vehicle 1, and output data of the captured images. The cameras 25c are example of an imager.

For example, a plurality of the cameras 25c are provided in or on the working vehicle 1. Of the plurality of cameras 25c provided in or on the working vehicle 1, an internal camera 25c1 provided inside the cabin 9 as shown in FIG. 2 captures an image of an area in the front of the working vehicle 1 from the operator's seat 10. Specifically, the internal camera 25c1 captures an image of an area in front (in the direction of travel) of the working vehicle 1 that has the same or substantially the same field of view as the operator seated in the operator's seat 10. That is, the internal camera 25c1 is configured to obtain a captured image of an area in the direction of travel of the working vehicle 1.

Each object detector 25d is also configured to detect the presence or absence of objects, the positions of objects, types of objects and/or the like based on the data of the captured image output from the camera 25c.

The sensing assembly 25 senses (monitors) situations in the surrounding area of the working vehicle 1 and the working device 2 using the laser sensors 25a, the ultrasonic sensors 25b, the cameras 25c and the object detectors 25d, and output sensing information indicating the results of the sensing to the in-vehicle controller 21. Although the sensing information includes at least detection information input from the object detectors 25d and data relating to the images captured by the cameras 25c, the sensing information may further include the detection information from the laser sensors 25a and the ultrasonic sensors 25b.

The state detector 26 detects the operating status of the working vehicle 1 and the working device 2. Specifically, the state detector 26 includes sensors provided in or on some portions of the working vehicle 1 and the working device 2, and a computing unit. The computing unit detects (computes) the operating status of the working vehicle 1 and the working device 2 based on output signals output from the sensors. The status relating to the working vehicle 1 detected by the state detector 26 includes driven and stopped states of each element included in the working vehicle 1, the direction of travel, travel speed, acceleration, posture and/or the like of the working vehicle 1. The status relating to the working device 2 detected by the state detector 26 includes the driven and stopped states of each element included in the working device 2, the posture and/or the like of the working device 2.

The state detector 26 may acquire, at predetermined interval(s), the position of the vehicle body 3 (position of the working vehicle 1) detected by the position detector 24 to detect (calculate) the position of the working device 2 from the detected position of the vehicle body 3, or detect a change in (movement of) the position of the vehicle body 3. The state detector 26 may detect the travel speed of the vehicle body 3 from the change in the position of the vehicle body 3. For another example, rotation speed sensor(s) to detect the rotation speed of the front wheels 7F and/or the rear wheels 7R of the traveling device 7 or the rotation speed of travel motor(s) to rotate the front wheels 7F and/or the rear wheels 7R may be provided, and the status detector 26 may detect the travel speed of the vehicle body 3 based on an output signal output from the rotation speed sensor(s).

The state detector 26 generates detection information indicating the detected operating status of the working vehicle 1 and working device 2, and outputs the detection information to the in-vehicle controller 21. For example, the detection information from the state detector 26 includes manipulation information relating to the working vehicle 1 and the working device 2. The manipulation information includes, for example, information relating to at least one of the speed (or the acceleration) of the working vehicle 1, the shift position of the transmission 5, the brake position of the brake 13, or the operation position of the working device 2.

The position detector 24 and the state detector 26 continuously output the detection information indicating the results detected at predetermined interval(s) or predetermined point(s) in time to the in-vehicle controller 21. The sensing assembly 25 continuously outputs the sensing information indicating the results of sensing at predetermined interval(s) or predetermined point(s) in time to the in-vehicle controller 21. The in-vehicle controller 21 causes the internal memory 21b to store the detection information input from the position detector 24 and the state detector 26 and the sensing information input from the sensing assembly 25. The in-vehicle controller 21 continuously transmits the detection information from the position detector 24 and the state detector 26 and the sensing information from the sensing assembly 25 stored in the internal memory 21b to the remote device 30 via the in-vehicle communicator 23 at predetermined interval(s) or predetermined point(s) in time in the case of the remote operation.

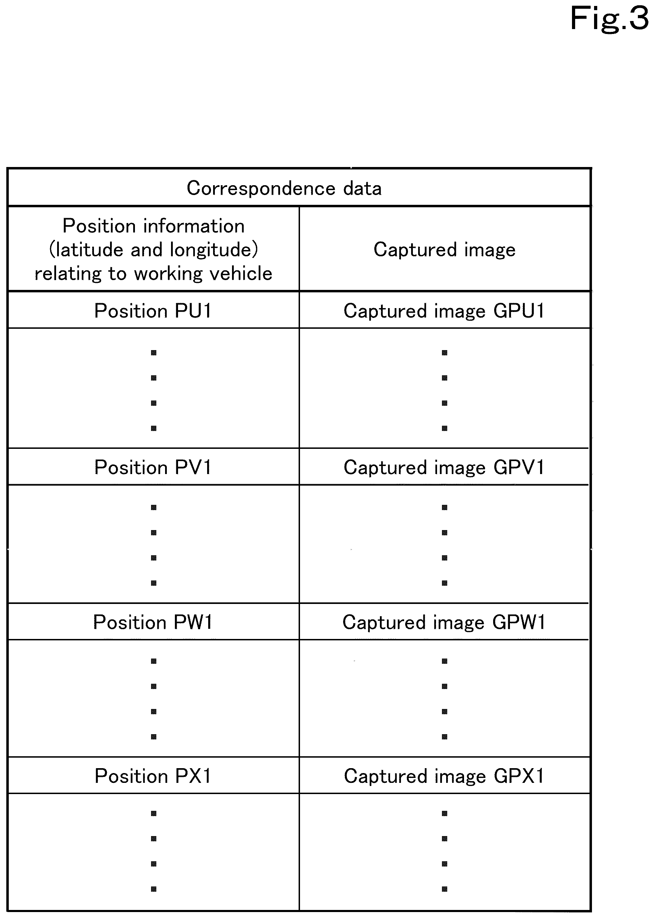

The detection information and the sensing information transmitted from the working vehicle 1 as such includes correspondence data in which the position information relating to the working vehicle 1 and the captured image of an area in the direction of travel of the working vehicle 1 are associated with each other (see FIG. 3). FIG. 3 illustrates an example of the correspondence data. In other words, the correspondence data in which the detection information from the position detector 24 (that is, the position information relating to the working vehicle 1) and the sensing information from the sensing assembly 25 (for example, the image captured by the internal camera 25c1) are associated with each other is continuously transmitted to the remote device 30. As for the captured image, as shown in FIG. 3, the correspondence data in which the position information relating to the working vehicle 1 detected by the position detector 24 (for example, positions PU1, PV1, PW1 and PX1) and the captured images captured by the internal camera 25c1 (for example, captured images GPU1, GPV1, GPW1 and GPX1) are associated with each other is continuously transmitted to the remote device 30.

The actuator group 27 includes electric or hydraulic motor(s), cylinder(s), control valve(s) and the like to actuate devices such as the prime mover 4, the traveling device 7, the transmission 5, the brake 13 and the linkage 8 of the working vehicle 1. The manipulator 11 includes a steering wheel 11a (FIG. 2), an accelerator pedal, a brake pedal, a shift lever 11d (FIG. 1) and the like. The in-vehicle controller 21 actuates corresponding actuator(s) included in the actuator group 27 according to the operation state of the manipulator 11 to drive the prime mover 4, the traveling device 7, the transmission 5, the brake 13 and/or the steering device 14 to control the travel and steering of the working vehicle 1.

The in-vehicle controller 21 communicates with a controller 2a of the working device 2 to cause the controller 2a to control the operation of the working device 2. In other words, the in-vehicle controller 21 controls the operations of the working device 2 via the controller 2a to perform work for an agricultural field. For example, the controller 2a is includes a CPU, a memory and/or the like. It is noted that some working devices 2 may not include the controller 2a. In this case, the in-vehicle controller 21 controls the posture of the working device 2 via the linkage 8 to cause the working device 2 to perform work for an agricultural field.

The in-vehicle controller 21 controls the travel of the working vehicle 1, work performed by the working device 2, and other operations performed by the working vehicle 1 based on the sensing information from the sensing assembly 25, the detection information from the state detector 26, the detection information from the position detector 24, and/or the like. In the case where the in-vehicle controller 21 has received a remote manipulation signal transmitted from the remote device 30 via the in-vehicle communicator 23, the in-vehicle controller 21 controls the travel of the working vehicle 1, work performed by the working device 2, and other operations performed by the working vehicle 1 based on the remote manipulation signal in addition to the above-mentioned information.

Furthermore, when controlling the travel of the working vehicle 1 or work performed by the working device 2, the in-vehicle controller 21 determines, based on the detection information from the object detectors 25d, whether or not an object is at less than a predetermined distance from the working vehicle 1 or the working device 2 and may contact the working vehicle 1 and the working device 2. Then, the in-vehicle controller 21, upon determining that an object is at less than a predetermined distance from the working vehicle 1 or the working device 2 and may contact the working vehicle 1 or the working device 2, controls the traveling device 7, the working device 2 and/or the like to stop the travel of the working vehicle 1 or work automatically and avoid the contact with the object.

The following discusses the remote device 30. As shown in FIG. 1, the remote device 30 is provided at a distance from the working vehicle 1. The remote device 30 is configured to remotely manipulate the working vehicle 1 by a human remote manipulator (operator)'s manipulation, and monitor the status of the working vehicle 1, situations in the surrounding area of the working vehicle 1 and the like. The remote device 30 includes a controller 31, a storing device (memory and/or storage) 32, a communicator 33, a display 34, a remote manipulator 35, and a notifier 36.

The controller 31 includes a processor to control operations of elements of the remote device 30. The processor functions as the controller 31 to control operations of elements of the remote device 30 by executing remote control program(s) stored in the storing device 32, for example. An internal memory 32a provided in the controller 31 is a volatile or nonvolatile memory. The internal memory 32a stores various information and data for the controller 31 to control operations of elements of the remote device 30 in a read/write manner.

The storing device 32 stores control programs such as remote control program(s) to remotely operate the working vehicle 1 and/or remote monitoring program(s) to remotely monitor the working vehicle 1, various data, and the like in advance. The storing device 32 is, for example, a solid state drive (SSD), a hard disc drive (HDD) and/or the like.

The communicator 33 includes an antenna, an IC, an electronic circuit and/or the like to perform communication wirelessly via a cellular phone network, the Internet, or a wireless LAN. The communicator 33 communicates wirelessly with the working vehicle 1 under control of the controller 31. The communicator 33 receives various data (detection information from the position detector 24 and the state detector 26, the sensing information from the sensing assembly 25 and the like) transmitted from the in-vehicle communicator 23. For example, the communicator 33 receives the correspondence data in which the position information relating to the working vehicle 1 and the captured image of an area in the direction of travel of the working vehicle 1 are associated with each other.

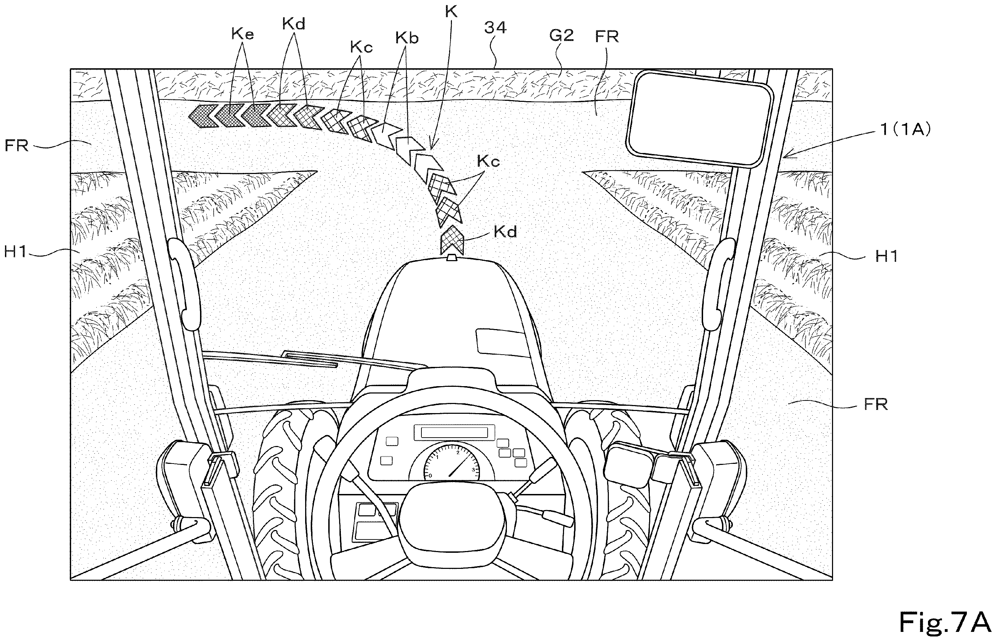

The display 34 is, for example, a liquid crystal display, an OLED display or the like. The display 34 displays various information for remote operation of the working vehicle 1. For example, the display 34 displays a remote operation screen G2 (see FIG. 7A described later). The remote operation screen G2 displays the image captured by the internal camera 25c1, i.e., the image of an area in the direction of travel of the working vehicle 1 captured during the remote manipulation. The display 34 includes a touch panel in or on the display screen and is configured to detect touches on the display screen.

The remote manipulator 35 is configured to remotely manipulate the working vehicle 1. The remote manipulator 35 includes a steering wheel 35a, an accelerator pedal 35b, a brake pedal 35c and a shift lever 35d, which are provided in the vicinity of a human remote manipulator's seat. A human remote manipulator sits on the human remote manipulator's seat and operates the remote manipulator 35 to remotely manipulate the travel of the working vehicle 1 or work performed by working device 2. The human remote manipulator also monitors the working vehicle 1 and the situation in the surrounding area via the display 34. The human remote manipulator can input information or instructions into the remote device 30 by operating the remote manipulator 35. The remote manipulator 35 may be a touch pad, hardware switch(es) or the like.

The notifier 36 includes a speaker 36a to output a notification sound and/or the like to the human remote manipulator.

When an operation instruction for the working vehicle 1 is input by the human remote manipulator operating the remote manipulator 35, the controller 31 generates a remote manipulation signal corresponding to the operation instruction and transmits the remote manipulation signal to the working vehicle 1 via the communicator 33. That is, the remote manipulation signal corresponding to the operation of the steering wheel 35a, the accelerator pedal 35b, the brake pedal 35c and the shift lever 35d is transmitted to the working vehicle 1. When the in-vehicle controller 21 of the working vehicle 1 receives the remote manipulation signal from the remote device 30 via the in-vehicle communicator 23, the in-vehicle controller 21 of the working vehicle 1 actuates element(s) of the working vehicle 1 based on the remote manipulation signal, the detection information from the position detector 24, the sensing information from the sensing assembly 25 and the detection information from the state detector 26 to control travel and steering of the working vehicle 1 and/or control work performed by the working device 2.

The in-vehicle controller 21 transmits the detection information from the position detector 24 and the state detector 26 and the sensing information from the sensing assembly 25 to the remote device 30 via the in-vehicle communicator 23. When the controller 31 of the remote device 30 receives the detection information from the position detector 24 and the state detector 26 and the sensing information from the sensing assembly 25 via the communicator 33, the controller 31 of the remote device 30 causes the internal memory 32a to store such information and/or causes the display 34 to display such information.

As shown in FIG. 1, the remote device 30 may include a display terminal 70 and the remote manipulator 35. In other words, the display terminal 70 may be a terminal device including the controller 31, the storing device 32, the communicator 33, the display 34 and the notifier 36. The display terminal 70 includes, for example, a portable terminal device such as a tablet device or a smartphone, or a stationary computer provided at a base station (not shown). The display terminal 70 may be a user interface.

The controller 31 causes the display 34 to display a travel route for the working vehicle 1 to travel and changes the manner in which the travel route is displayed according to information for teaching of the remote manipulation of the working vehicle 1. The information for teaching of the remote manipulation is provided to the human remote manipulator during the remote manipulation. The information for teaching of the remote manipulation includes model travel information J including (i) a model travel route used as the model for the remote manipulation of the working vehicle 1 and (ii) model manipulation information including manipulation instructions for the model travel route. For example, the manipulation instructions include instructions for various manipulations (speed, changing speed stages, braking, raising or lowering the working device 2, and/or the like) for manipulation of the working vehicle 1 and the working device 2.

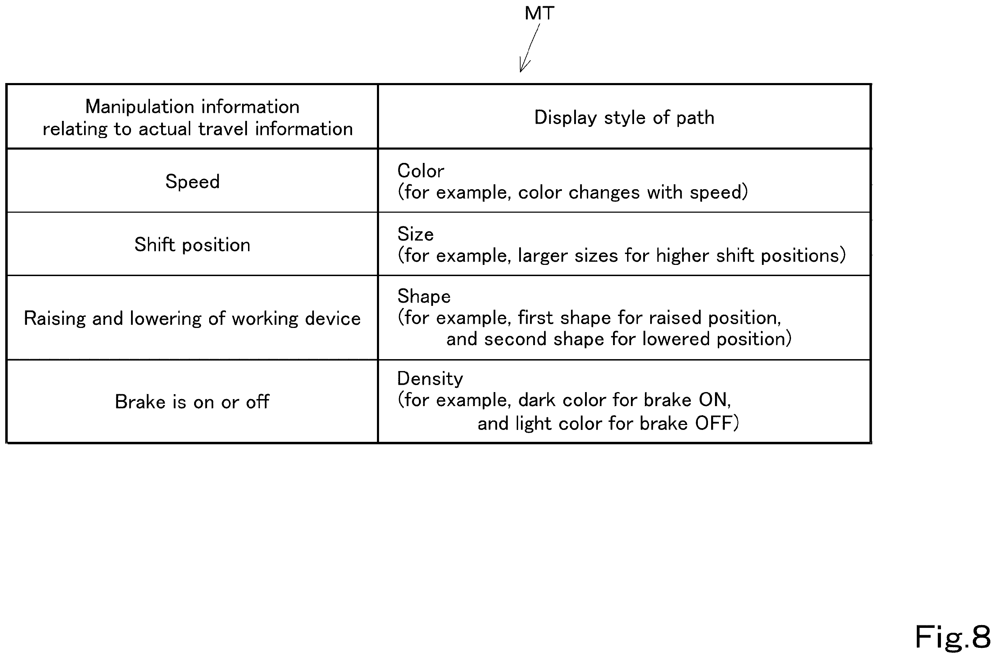

The controller 31 displays the model travel route in the form of a line K (see FIG. 7A, etc.) and changes the manner in which the line K is displayed according to the model manipulation information for the model travel route. That is, the controller 31 changes the manner in which the line K is displayed (for example, the color(s) of the line K as shown in FIGS. 7A and 8) according to a manipulation instruction for the model travel route (for example, an instruction for speed). For example, the human remote manipulator can recognize the instruction for speed by looking at the color of the line K and remotely manipulate the working vehicle 1 in accordance with the instruction for speed as a model.

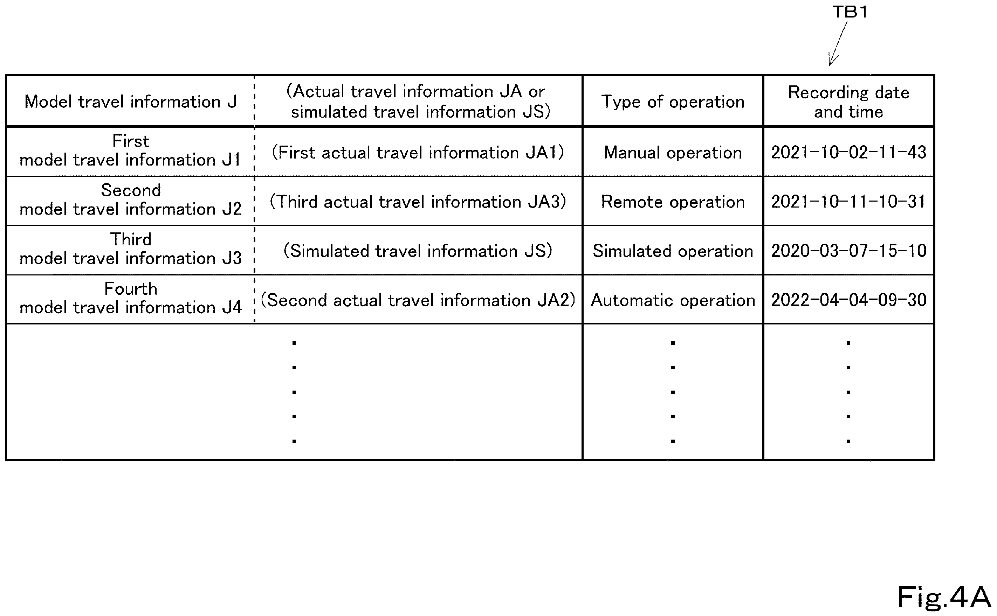

The storing device 32 of the remote device 30 stores one or more pieces of the model travel information J. FIG. 4A illustrates an example of a storage table TB1 of the storing device 32. The storing device 32 includes the storage table TB1 to store one or more pieces of the model travel information J. As shown in FIG. 4A, the model travel information J is broadly divided into actual travel information JA and simulated travel information JS. The actual travel information JA is information in which (i) one or more pieces of position information for a travel route each obtained when the working vehicle 1 was actually operated manually (operated by manual manipulation or remote manipulation) or operated automatically (operated by automatic manipulation), and (ii) one or more pieces of manipulation information corresponding to the respective one or more pieces of position information, are associated with each other. On the other hand, the simulated travel information JS is information in which (i) one or more pieces of position information for a travel route each obtained when the simulated operation of the working vehicle 1 was performed, and (ii) one or more pieces of manipulation information corresponding to the respective one or more pieces of position information, are associated with each other.

The above-described actual travel information JA is not information relating to the route and the manipulation relating to the working vehicle 1 (subject working vehicle 1A) remotely manipulated currently by the human remote manipulator, but is information relating to the route and the manipulation relating to another vehicle 1B other than the subject working vehicle 1A. Specifically, the subject working vehicle 1A here is the working vehicle 1 itself which is currently remotely manipulated. Examples of the other vehicle 1B here include a working vehicle other than the subject working vehicle 1A (another working vehicle 1 other than the working vehicle 1) and the subject working vehicle 1A which was operated manually or operated automatically in the past before the current remote manipulation (that is, the subject working vehicle 1A which was operated manually or operated automatically in the past). For example, information relating to the route and the manipulation relating to manual operation included in the actual travel information JA is information relating to the route and the manipulation obtained when the other vehicle 1B was manually operated by a driver in the other vehicle 1B or when the other vehicle 1B was remotely operated manually by a human remote manipulator not in the other vehicle 1B. Assume that the position detector 24 of the other vehicle 1B (for example, the working vehicle 1) is provided at the widthwise center of the working vehicle 1 in plan view.

In FIG. 4A, first model travel information J1 is first actual travel information JA1 obtained by manual operation, second model travel information J2 is third actual travel information JA3 obtained by remote operation, third model travel information J3 is simulated travel information JS obtained by simulated operation, and fourth model travel information J4 is second actual travel information JA2 obtained by automatic operation.

The first, second and fourth model travel information J1, J2 and J4 are transmitted from the working vehicle 1 to the remote device 30 and stored in the storage table TB1. For example, the first, second and fourth model travel information J1, J2 and J4 are each the actual travel information JA in which the manipulation information obtained when the working vehicle 1 was actually operated manually, operated remotely or operated automatically in the past and the position information relating to the working vehicle 1 are associated with each other. In other words, the first, second and fourth model travel information J1, J2 and J4 are each the actual travel information JA in which the actual travel route and the manipulation information relating to the working vehicle 1 and the working device 2 for the actual travel route are associated with each other. That is, the actual travel information JA is information in which a plurality of positions defining the actual travel route of the working vehicle 1 (that is, pieces of position information) and the one or more pieces of manipulation information relating to the working vehicle 1 and the working device 2 corresponding to the plurality of positions (the pieces of position information) are associated with each other. The manipulation information includes, for example, information relating to at least one of the speed (or acceleration) of the working vehicle 1, the shift position of the transmission 5 of the working vehicle 1, the brake position of the brake 13 of the working vehicle 1, or the operating position of the working device 2.

The third model travel information J3 is the simulated travel information JS. The third travel information J3 is generated by simulation by the controller 31 of the remote device 30 in advance and stored in the storage table TB1. The third model travel information J3 is the simulated travel information JS in which the simulated travel route and the manipulation information relating to the working vehicle 1 and the working device 2 on the simulated travel route are associated with each other. In other words, the simulated travel information JS is simulation information in which the plurality of positions (that is, pieces of position information) defining the simulated travel route of the working vehicle 1 and the manipulation information relating to the working vehicle 1 and the working device 2 at the plurality of positions (the pieces of position information) are associated with each other. The manipulation information includes, for example, information relating to at least one of the speed (or the acceleration) of the working vehicle 1, the shift position of the transmission 5 of the working vehicle 1, the brake position of the brake 13 of the working vehicle 1, or the operating position of the working device 2.

The controller 31, when remotely manipulating the working vehicle 1, selects one of the one or more pieces of the model travel information J and causes the model travel route indicated by the selected piece of model travel information J to be displayed in the form of the line K on the remote operation screen G2 in a superimposed manner. In other words, the controller 31 changes the manner in which the line K is displayed according to the model manipulation information. The line K indicates the model travel route. The line K may be another type of line such as a solid line or a broken line.

The controller 31, according to the model manipulation information, changes the manner in which the line K is displayed by changing at least one of the size, the color, the density, the shape or the pattern of the line K.

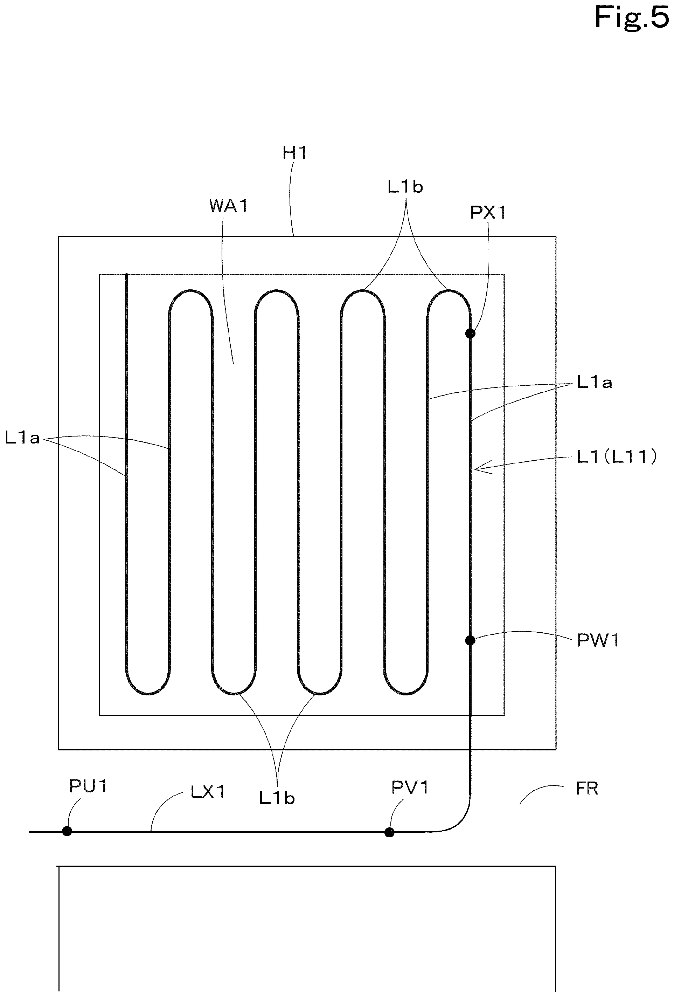

The following discusses the actual travel information JA that is an example of the model travel information in detail. FIG. 5 illustrates an example of an actual travel route on a farm road, and a planned travel route and an actual travel route on an agricultural field. For example, it is often not apparent which of farm roads is travelable by the working vehicle 1, which part of a farm road is travelable and which part of the farm road is not travelable by the working vehicle 1, for example. That is, there are more unclear aspects of the farm road than the agricultural field. As shown in FIG. 5, the in-vehicle controller 21 of the subject working vehicle 1A (working vehicle 1) is configured or programmed to define, in advance, the actual travel route LX1 on the farm road FR traveled by the other vehicle 1B from a barn to the agricultural field H1. With this, it is possible to, by utilizing the actual travel route LX1 on the farm road FR traveled by the other vehicle 1B as an example, provide support to make decisions regarding the remote operation by the human remote manipulator for the farm road FR.

For example, the in-vehicle controller 21 of the other vehicle 1B determines that the position information and the manipulation information for the actual travel route LX1 on the farm road FR obtained when the other vehicle 1B was traveled on the farm road FR in the past by manual operation are the actual travel information for the farm road FR, and stores the actual travel information together with time information indicating the date and time of the manual operation in the storing device 28. The in-vehicle controller 21 is configured or programmed to acquire the date and time of the manual operation via the RTC. The position information for the actual travel route LX1 on the farm road FR corresponds to the position information detected by the position detector 24. The manipulation information for the actual travel route LX1 on the farm road FR corresponds to the detection information (information indicating the manipulations relating to the working vehicle 1 and the working device 2) detected by the state detector 26.

As shown in FIG. 5, the in-vehicle controller 21 of the subject working vehicle 1A and the in-vehicle controller 21 of the other vehicle 1B are each configured or programmed to define a planned travel route L1 in a work area WA1 in the agricultural field H1 in advance. The planned travel route L1 includes a plurality of straight route segments L1a and a plurality of semicircular turn route segments L1b each connecting ends of two adjacent straight route segments L1a. For example, assume that an operator seated in the operator's seat 10 of the other vehicle 1B operates the manipulator 11 to cause the other vehicle 1B to travel along the planned travel route L1 by manual operation and perform work using the working device 2. FIG. 5 shows the case in which the actual travel route L11 of the other vehicle 1B during the manual operation matches the planned travel route L1. The in-vehicle controller 21 of the other vehicle 1B determines that the position information and the manipulation information for the actual travel route L11 during the manual operation are the actual travel information, and stores the actual travel information together with the time information indicating the date and time of the manual operation in the storing device 28. The in-vehicle controller 21 of the other vehicle 1B is configured or programmed to acquire the date and time of the manual operation via the RTC. The position information for the actual travel route L11 corresponds to the position information detected by the position detector 24. The manipulation information for the actual travel route L11 corresponds to the detection information detected by the state detector 26 (information indicating the manipulations of the working vehicle 1 and the working device 2).

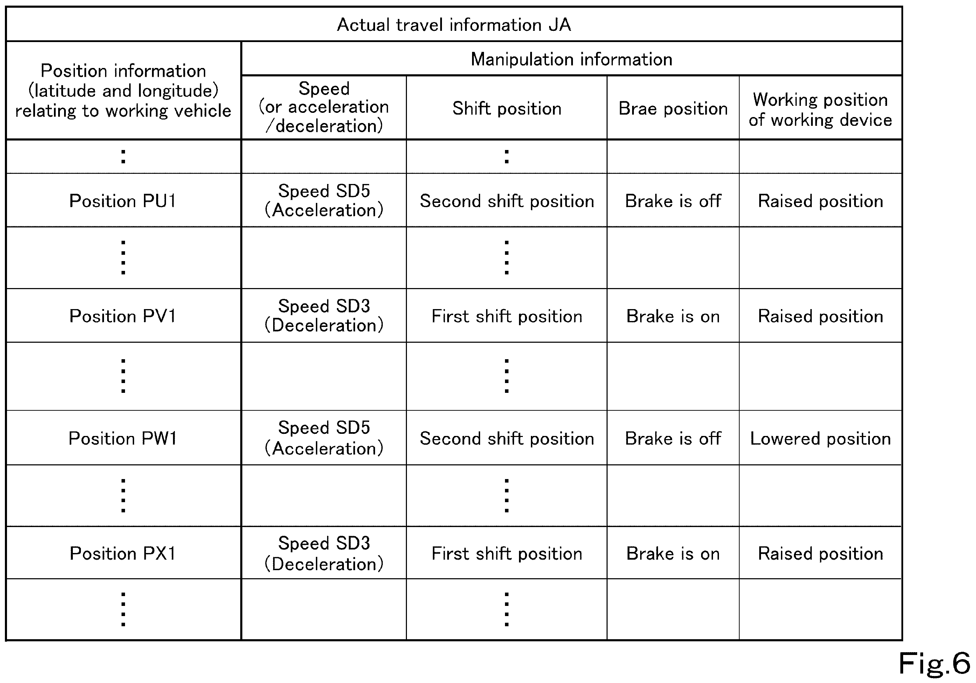

FIG. 6 illustrates an example of the actual travel information. As shown in FIG. 6, the manipulation information obtained when the position information included in the actual travel information JA is a position PU1 (position PU1 shown in FIG. 5) includes "the working vehicle 1 is at a speed SD5 (acceleration)", "the shift position of the transmission 5 is a second shift position", "the brake 13 is off", and "the operating position of the working device 2 is a raised position". The manipulation information obtained when the position information included in the actual travel information JA is a position PV1 (position PV1 shown in FIG. 5) includes "the working vehicle 1 is at a speed SD3 (deceleration), "the shift position of the transmission 5 is a first shift position", "the brake 13 is on", and "the operating position of the working device 2 is the raised position". The manipulation information obtained when the position information included in the actual travel information JA is a position PW1 (position PW1 shown in FIG. 5) includes "the working vehicle 1 is at a speed SD5 (acceleration)", "the shift position of the transmission 5 is the second shift position", "the brake 13 is off", and "the operating position of the working device 2 is a lowered position". The manipulation information obtained when the position information included in the actual travel information JA is a position PX1 (position PX1 shown in FIG. 5) includes "the working vehicle 1 is at a speed SD3 (deceleration)", "the shift position of the transmission 5 is at the first shift position", "the brake 13 is on", and "the operating position of the working device 2 is the raised position".

After the working vehicle 1 finishes traveling on the farm road FR or work for the agricultural field H1, or upon receiving a transmission instruction from the operator of the other vehicle 1B, the in-vehicle controller 21 of the other vehicle 1B transmits the actual travel information JA obtained during the manual operation stored in the storing device 28 to the remote device 30 via the in-vehicle communicator 23 at a time or in batches. When the actual travel information JA obtained during the manual operation is transmitted to the remote device 30 in batches, the storing device 32 of the remote device 30 stores the plurality of pieces of actual travel information JA obtained during the manual operation collectively as a single piece of actual travel information JA obtained during the manual operation. The in-vehicle controller 21 may transmit the actual travel information JA to the remote device 30 upon receiving a request instruction from the remote device 30 or at a predetermined transmission point in time. With regard to the actual travel information JA obtained the manual operation, the in-vehicle controller 21 may transmit the actual travel information JA obtained so far to the remote device 30 every time a predetermined amount of data or a predetermined time is reached.

It is noted that the actual travel information JA is not limited to the actual travel information JA regarding the manual operation, may be the actual travel information JA obtained when the other vehicle 1B was remotely operated by the remote device 30 in the past. The in-vehicle controller 21 of the other vehicle 1B may store the actual travel information JA relating to the remote operation together with the time information indicating the date and time of the remote operation in the memory 21b or the storing device 28, and transmit it to the remote device 30 via the in-vehicle communicator 23. The in-vehicle controller 21 may continuously transmit the position information and the manipulation information during the remote operation together with the time information to the remote device 30, and the storing device 32 may store the received position information, manipulation information and time information received by the remote device 30 as the actual travel information JA relating to the remote operation.

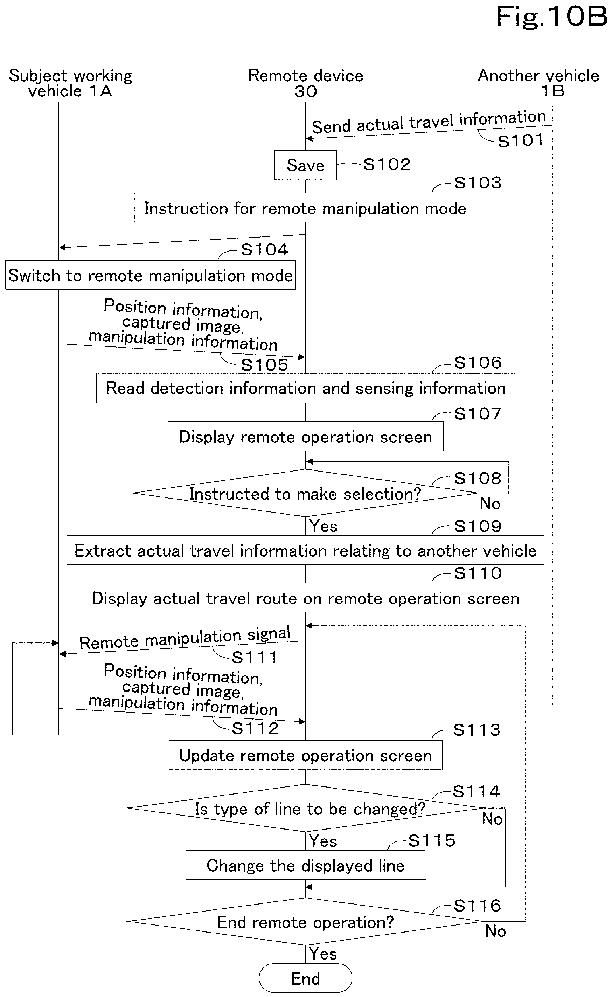

As shown in FIG. 10B described later, the other vehicle 1B transmits the above-described actual travel information JA to the remote device 30 (S101). The remote device 30 saves (stores) the received actual travel information JA in the storage table TB1 of the storing device 32 (S102). The simulated travel information JS generated in advance by simulation is stored in the storage table TB1. Thus, the actual travel information JA relating to the other vehicle 1B and the simulated travel information JS are stored in the storing device 32 of the remote device 30 in advance.

The controller 31 of the remote device 30 is configured or programmed to select any one of pieces of model travel information J stored in the storage table TB1 and cause the model travel route indicated by the selected piece of model travel information J to be displayed in the form of the line K as shown in FIG. 7A in a superimposed manner on the captured image displayed on the remote operation screen G2. In the present example embodiment, for example, the controller 31 is configured or programmed to select one of the pieces of the model travel information J according to the operation by a human remote manipulator.

FIG. 7A illustrates an example of the remote operation screen G2. For example, the line K includes a series of a plurality of arrowhead indicators (indicators Kb to Ke in FIG. 7A). It is noted that the plurality of indicators (the indicators Kb to Ke in FIG. 7A) defining the line K are not limited to the arrowhead shape, and may be any of various shapes such as a triangle, a quadrangle, and an arrow.

The controller 31 changes the manner in which the line K is displayed according to the manipulation information included in the model travel information J (actual travel information JA, simulated travel information JS). Specifically, the storing device 32 stores a display style table MT as shown in FIG. 8. FIG. 8 illustrates an example of the display style table MT stored in the storing device 32. The controller 31 is configured or programmed to, using the display style table MT, according to the manipulation information included in the model travel information J (actual travel information JA, simulated travel information JS), change the manner in which the line K is displayed by changing at least one of the size, the color, the density, the shape or the pattern of the line K. For example, when the actual travel route included in the actual travel information JA is the line K, it can be said that the line K is a path. It is noted that the controller 31 may cause the display 34 to display object(s) other than the line K only when an event occurs. For example, the controller 31 may cause the display to indicate speed with the color of the line K and display another object other than the line K (for example, a cross mark) at a braking point (at a position where the brakes were applied).

Specifically, as shown in FIG. 8, the color of the line K changes according to the speed (travel speed) of the working vehicle 1 that is an example of the manipulation information. For example, as the travel speed increases from the lowest speed, the color changes to green, yellow green, yellow, orange, dark orange, red orange, and red of Oswald's color in this order, for example. For example, the color of the line K is green at a travel speed of [0 km/h], and the color changes to yellow green, yellow, orange, dark orange, red orange, and red in this order every time the travel speed increases by a unit speed (for example, [0.5 km/h]). This is merely an example, and the color may change to purple, indigo, blue, green, yellow, dark orange and red, or may change to green, yellow, dark orange and red in this order.

In FIG. 7A, for example, the indicators Kb are displayed in yellow green, and indicate that the travel speed of the working vehicle 1 is [0.5 km/h]. The indicators Kc are displayed in yellow, and indicate that the travel speed of the working vehicle 1 is [1 km/h]. The indicators Kd are displayed in yellow orange, and indicate that the travel speed of the working vehicle 1 is [1.5 km/h]. The indicators Ke are displayed in dark orange, and indicate that the travel speed of the working vehicle 1 is [2 km/h].

The size of the line K (for example, width) changes according to the shift position of the transmission 5 that is an example of the manipulation information. The transmission 5 is switched to a first speed stage which is a first speed range by operating the shift lever 11d to a forward-travel first-speed-stage position, and is switched to a second speed stage which is a second speed range higher than the first speed range by operating the shift lever 11d to a forward-travel second-speed-stage position. The size (width) of the line K is a first width when the shift position of the transmission 5 that is an example of the manipulation information indicates that the transmission 5 is switched to the first speed stage, and the size (width) of the line K is a second width wider than the first width when the shift position of the transmission 5 indicates that the transmission 5 is switched to the second speed stage.

The shape of the line K changes according to the operating position (for example, raised position, lowered position) of the working device 2 that is an example of the manipulation information. The line K is displayed in a first shape when the operating position of the working device 2 is the raised position, and the line K is displayed in a second shape different from the first shape when the operating position of the working device 2 is the lowered position.

The density of the line K changes according to the brake position of the brake 13 of the working vehicle 1 that is an example of the manipulation information. The line K is displayed in a dark color (displayed with a first density) at a position where the brake 13 is on, and the line K is displayed in a light color (displayed with a second density lighter than the first density) at a position where the brake is off.

For example, the actual travel information JA shown in FIG. 6 includes the actual travel route L11 shown in FIG. 5 obtained during the manual operation of the other vehicle 1B (a route connecting a plurality of traveling positions indicated by a plurality of pieces of position information) and manipulation information for the actual travel route L11. The storing device 32 stores height information relating to the operator's seat 10 of the subject working vehicle 1A. The height information relating to the operator's seat 10 may be received from the subject working vehicle 1A (working vehicle 1) or may be registered in advance. When remotely manipulating the subject working vehicle 1A, the controller 31 acquires the line K shown in FIG. 7A by performing known viewpoint transformation to transform the planar actual travel route L11 into the actual travel route L11 as seen from the operator's seat 10 using both the actual travel route L11 during the manual operation shown in FIG. 5 and the height information relating to the operator's seat 10 of the subject working vehicle 1A, and causes the display 34 to display the line K on the remote operation screen G2 . The controller 31 may cause the display 34 to display the line K shown in FIG. 7A on the remote operation screen G2 by performing projection transformation with respect to a corresponding area (the area that corresponds to the captured image) which is a portion of a planar map including the actual travel route L11 during the manual operation shown in FIG. 5. The projection transformation is a process to align the outline of the farm road FR (or the outline of the agricultural field H1, or the outline of the farm road and the agricultural field H1) in the corresponding area with the outline of the farm road FR (or the outline of the agricultural field H1, or the outline of the farm road FR and the agricultural field H1) in the captured image displayed on the remote operation screen G2.

Although the controller 31 appropriately defines the length of the line K displayed on the remote operation screen G2, the controller 31 may cause the display 34 to display all the line(s) K included in the remote operation screen G2. For example, when the distance between the current position of the working vehicle 1 and the position of a line K is a first predetermined distance (for example, 2 m or 3 m), the controller 31 may cause the display 34 to display the line K of a predetermined reference length (for example, 10 m) from a start point which is a position on the actual travel route that is closest from the current position of the subject working vehicle 1A. When the distance between the current position of the working vehicle 1 and the position of a line K is a second predetermined distance which is longer than the first predetermined distance (for example, 4 m or more), the controller 31 may cause the display 34 to display the line K with a first length (for example, 20 m) which is longer than the predetermined reference length from the start point or a second length (for example, 5 m) which is shorter than the predetermined reference length from the start point. With this, it is possible to indicate that the line K is at a distance more than the first predetermined distance from the subject working vehicle 1A. Moreover, when the line K has the first length, it is possible to easily display the line K far from the subject working vehicle 1A within the remote operation screen G2, making it possible to eliminate or reduce the likelihood that the line K far from the subject working vehicle 1A will be overlooked.

The following details the case that the controller 31 determines that the distance between the current position of the subject working vehicle 1A and a line K is the first predetermined distance. For example, with regard to the model travel route indicated by the model travel information J (which is the actual travel route indicated by the actual travel information JA, for example) that is associated with a target range including the position indicated by the current position information relating to the subject working vehicle 1A, the controller 31 causes the display 34 to display, in the form of the line K, a route that extends from a start point of the actual travel route (the point closest from the current position of the subject working vehicle 1A) to the position at the predetermined reference length (distance) from the start point. It is noted that the controller 31 may change the length of the line K according to the travel speed of the subject working vehicle 1A. For example, the controller 31 may define the length of the line K to be a reference length (for example, 10 m) when the travel speed is [0 km/h], and may define the length of the line K to be a length obtained by adding a constant value (for example, 1 m) to the reference length (for example, 10 m) as the travel speed increases by an unit speed (for example, [0.5 km/h]). For example, when the travel speed is [1.5 km/h], the length of the line K is 13 m (= the reference length (10 m) + the constant value (for example, 1 m) × 3).

As shown in FIG. 7A, the controller 31 causes the display 34 to display, in the form of the line K, for example, the actual travel route indicated by the actual travel information JA (i.e., the actual travel route based on the widthwise center of the other vehicle 1B as a reference position). The remote operation screen G2 shown in FIG. 7A displays a situation in which remote manipulation is performed such that the widthwise center of the subject working vehicle 1A (working vehicle 1) during the remote manipulation matches the line K indicating the actual travel route of the other vehicle 1B. With this, it is possible to display the line K based on the widthwise center of the working vehicle 1 as a reference position.

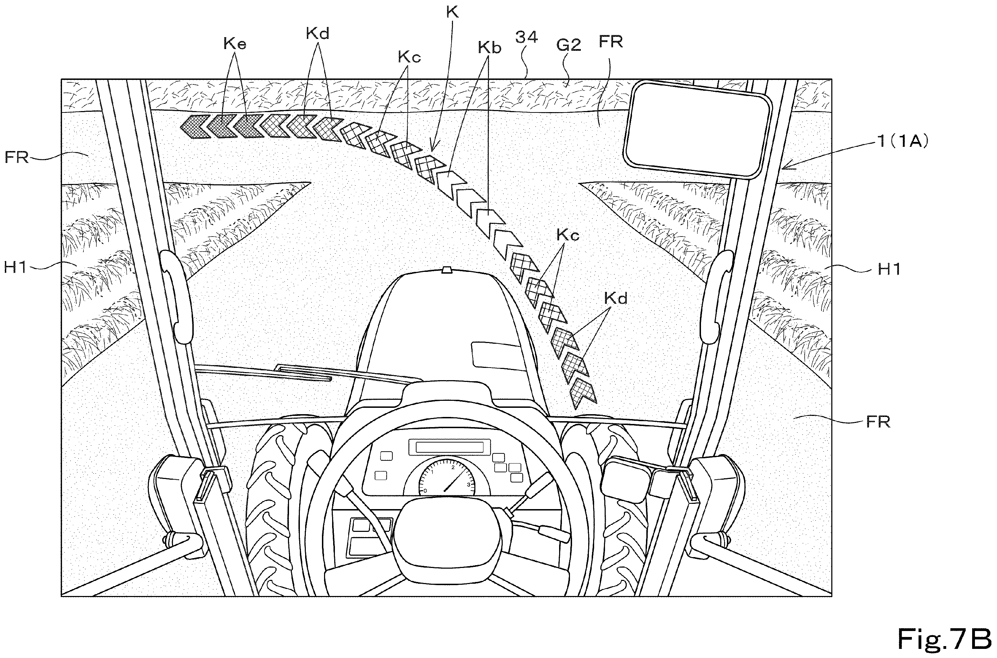

As shown in FIG. 7B, the controller 31 may cause the display 34 to display the line K based on a wheel position of the working vehicle 1 as a reference position. Specifically, the line K shown in FIG. 7B is offset from the actual travel route of the other vehicle 1B by the distance between the widthwise center of the subject working vehicle 1A and the wheel position of the subject working vehicle 1A. The remote operation screen G2 shown in FIG. 7B displays a situation in which remote manipulation is performed such that the wheel position of the subject working vehicle 1A (working vehicle 1) during the remote manipulation matches the line K. With this, it is possible to display the line K based on the wheel position of the working vehicle 1 as a reference position. The controller 31 may cause the display 34 to display the line K based on the widthwise center of the operator's seat 10 as a reference position. With this, it is possible to display the line K based on the widthwise center of the operator's seat 10 of the working vehicle 1 as a reference position.

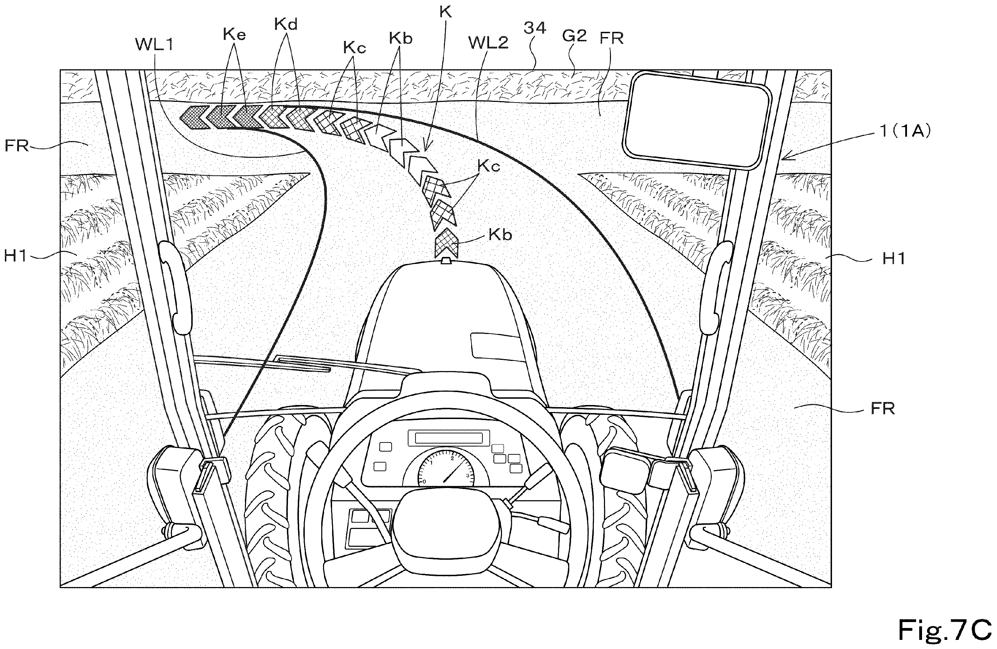

As shown in FIG. 7C, the controller 31 may cause the display 34 to display the line K based on the maximum width of the working vehicle 1 as a reference position. In FIG. 7C, the controller 31 causes the display 34 to display a left end line WL1 indicating the left end in the maximum width of the working vehicle 1 and a right end line WL2 indicating the right end in the maximum width of the working vehicle 1, and display the line K at a midpoint between the left end line WL1 and the right end line WL2. Specifically, the left end line WL1 is offset from the actual travel route of the other vehicle 1B by the distance between the widthwise center of the subject working vehicle 1A and the left end in the width direction of the subject working vehicle 1A. The right end line WL2 is offset from the actual travel route of the other vehicle 1B by the distance between the widthwise center of the subject working vehicle 1A and the right end in the width direction of the subject working vehicle 1A. The line K is not limited to the above, and the line K may have a width from the left end line WL1 to the right end line WL2. With this, it is possible to display the line K based on the maximum width of the working vehicle 1 as a reference position. Furthermore, the controller 31 may cause the display 34 to display the line K based on the maximum width of the working vehicle 1 and the working device 2 (that is, the maximum width of the assembly of the working vehicle 1 and the working device 2) as a reference position. With this, it is possible to display the line K based on the maximum width of the working vehicle 1 and the working device 2 as a reference position.

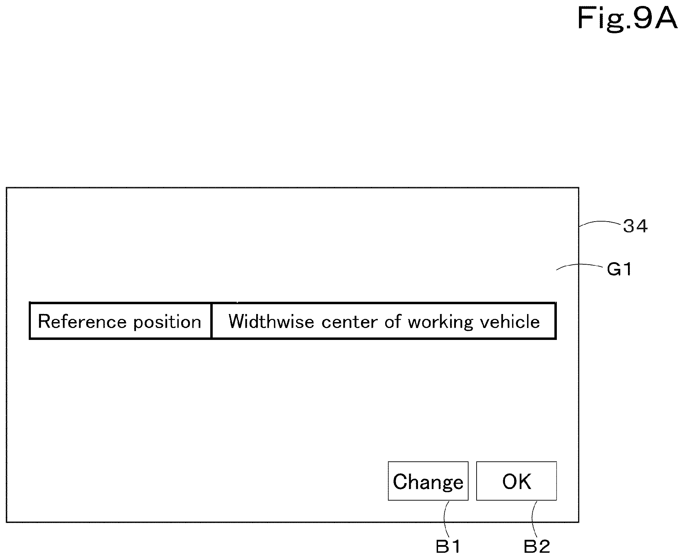

FIGS. 9A to 9C respectively illustrate examples of a selection screen G1 of the display 34. The controller 31 is configured or programmed to change the type of the line K in response to a selection operation on the selection screen G1. Specifically, the controller 31, upon receiving a selection instruction to select the reference position of the line K from a human remote manipulator, causes the display 34 to display the selection screen G1 as shown in FIG. 9A. The selection screen G1 shown in FIG. 9A indicates that the widthwise center of the working vehicle 1 is defined as the reference position.

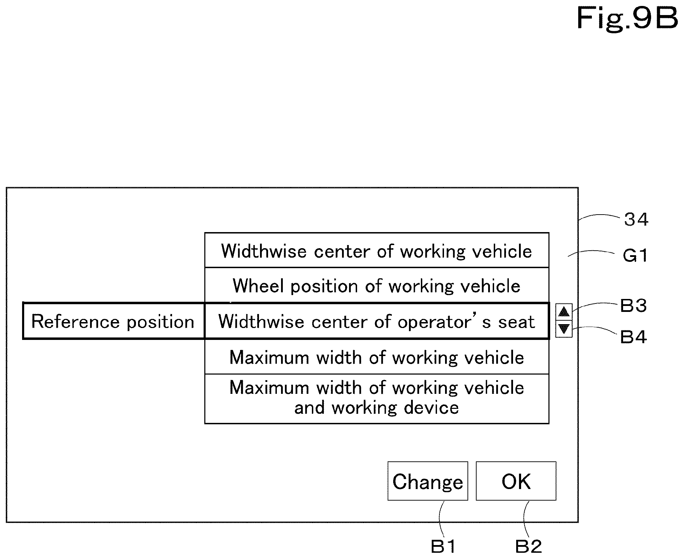

As shown in FIG. 9B, when the human remote manipulator touches a "change" button on the selection screen G1, the controller 31 causes the display 34 to display five selectable items including the widthwise center of the working vehicle 1, the wheel position of the working vehicle 1, the widthwise center of the operator's seat 10, the maximum width of the working vehicle 1, and the maximum width of the working vehicle 1 and the working device 2. The controller 31 moves the selection upward every time the human remote manipulator operates an UP button, and moves the selection downward every time the human remote manipulator operates a DOWN button. FIG. 9B illustrates the situation where the DOWN button has been operated twice and the reference position has been changed to the widthwise center of the operator's seat 10.

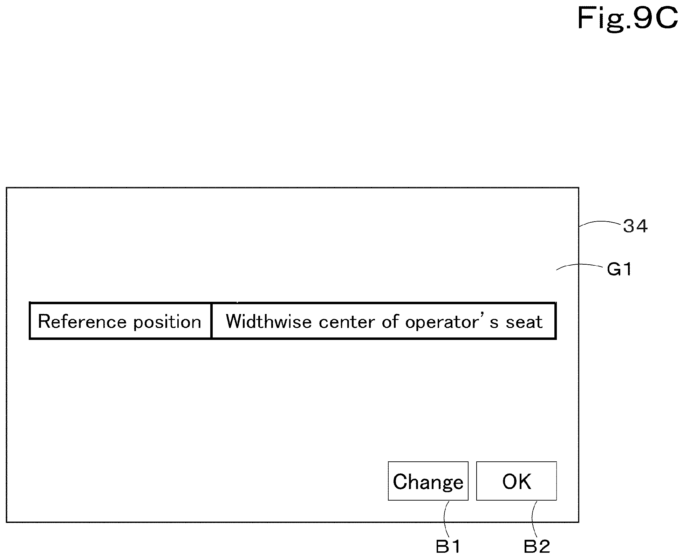

As shown in FIG. 9C, when the human remote manipulator touches an OK button, the controller 31 determines the selected item to be the reference position. FIG. 9C indicates that the widthwise center of the operator's seat 10 is determined as the reference position. It is noted that the controller 31 may change the type of the line K by the human remote manipulator operating one or more selection buttons (not shown) provided in the vicinity of the operator's seat 10.

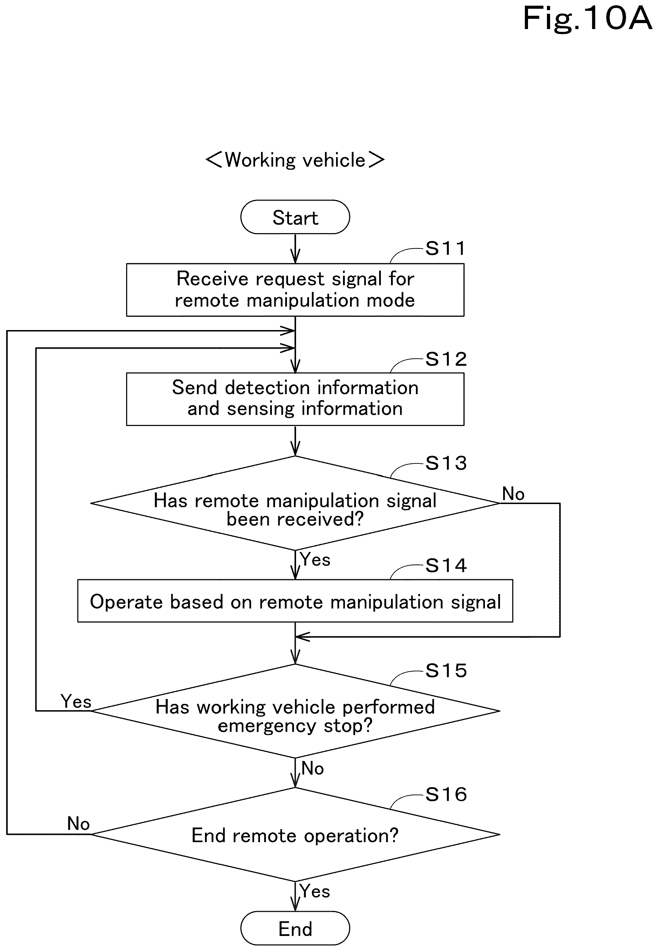

The following discusses the process of displaying the model travel information J in the form of the line K on the remote operation screen G2 of the display 34 in a superimposed manner when the subject working vehicle 1A (working vehicle 1) is remotely manipulated, with reference to FIGS. 10A and 10B.

FIG. 10A is a flowchart showing operations of the working vehicle 1 during the remote operation. FIG. 10B is a flowchart showing operations and the like of the remote device 30 when remotely manipulating the working vehicle 1. As described earlier, the actual travel information JA is transmitted from the other vehicle 1B to the remote device 30 (S101 in FIG. 10B) and the actual travel information JA is stored (recorded) in advance in the storing device 32 of the remote device 30 (S102 in FIG. 10B).

As shown in FIG. 10B, upon receiving an instruction for the remote manipulation mode from a human remote manipulator (S103), the controller 31 transmits a request signal for the remote manipulation mode to the subject working vehicle 1A (working vehicle 1) via the communicator 33.

The in-vehicle controller 21 of the subject working vehicle 1A switches the subject working vehicle 1A from a normal mode (a mode which is not the remote manipulation mode) to the remote manipulation mode (S104), and transmits position information, image information and manipulation information to the remote device 30 via the in-vehicle communicator 23 (S105).

Specifically, as shown in FIG. 10A, the in-vehicle controller 21 of the subject working vehicle 1A, upon receiving the request signal for the remote manipulation mode from the remote device 30 via the in-vehicle communicator 23 (S11), causes the in-vehicle communicator 23 to transmit, to the remote device 30, the current detection information from the position detector 24 and the state detector 26 and the current sensing information from the sensing assembly 25 (S12). As described earlier, the detection information from the state detector 26 includes the manipulation information relating to the working vehicle 1 and the working device 2 (information relating to at least one of the speed (or the acceleration) of the working vehicle 1, the shift position of the transmission 5, the brake position of the brake 13 or the operating position of the working device 2).

Referring back to FIG. 10B, the communicator 33 of the remote device 30 receives the current detection information from the position detector 24 and the state detector 26 and the current sensing information from the sensing assembly 25, and store the current detection information and the current sensing information in the storing device 32. The controller 31 reads, into the internal memory 32a, the current detection information from the position detector 24 and the state detector 26 and the sensing information from the sensing assembly 25, device information indicating the specifications of the working vehicle 1 and the working device 2, and map information relating to the surrounding area of the working vehicle 1 stored in the storing device 32 (S106).

The communicator 33 receives the device information indicating the specifications relating to the working vehicle 1 and the working device 2, which is then stored in the storing device 32. The storing device 32 stores, in advance, the map information relating to the area where the working vehicle 1 is positioned. The controller 31 extracts the position of the working vehicle 1 from the detection information from the position detector at S106, defines a range within a predetermined distance from the position of the working vehicle 1 as the surrounding area of the working vehicle 1, and reads the map information relating to the range from the storing device 32 into the internal memory 32a. For another example, the controller 31 may receive the map information relating to the range within a predetermined distance from the position of the working vehicle 1 at S106 from an external server via the communicator 33 over the Internet or the like and read the received map information.

The controller 31 then causes the display 34 to display the remote operation screen G2 based on the detection information from the position detector 24 and the state detector 26, the sensing information from the sensing assembly 25, the device information and the map information (S107).

The controller 31 determines whether or not the controller 31 is instructed to select the line K (S108). The controller 31, when instructed to select the line K by the human remote manipulator (YES at S108), extracts the actual travel information JA relating to the other vehicle 1B selected by the human remote manipulator (S109). For example, assume that the controller 31 extracts the second actual travel information JA2 because the second actual travel information JA2 is selected by the operation of the human remote manipulator. Note that, when "There is a display instruction for the line K." is set as default at S108, the controller 31 extracts the actual travel information JA relating to the other vehicle 1B set as default (S109).

The controller 31 causes the display 34 to display the second actual travel information JA2 extracted at S109 in the form of the line K on the remote operation screen G2 (S110). For example, as shown in FIG. 7A, the controller 31 causes the display 34 to display the actual travel route indicated by the position information included in the second actual travel information JA2 in the form of the line K on the remote operation screen G2, and to display the line K in the manner indicated by the manipulation information included in the second actual travel information JA2.

When "the widthwise center of the working vehicle 1" shown in FIG. 9A is selected as the reference position of the line K by the human remote manipulator, the controller 31 defines "the widthwise center of the working vehicle 1" as the reference position of the line K, and when the reference position of the line K is changed to "the widthwise center of the operator's seat 10" as shown in FIG. 9C, the controller 31 defines "the widthwise center of the operator's seat 10" as the reference position of the line K.

The controller 31, when the remote manipulator 35 is operated to perform manipulation, transmits a remote manipulation signal corresponding to the operation of the remote manipulator 35 to the subject working vehicle 1A via the communicator 33 (S111). For example, remote manipulation signals including various operation signals corresponding to the operation of the steering wheel 35a, the accelerator pedal 35b, the brake pedal 35c and the shift lever 35d by the human remote manipulator are transmitted from the remote device 30 to the working vehicle 1.

The in-vehicle controller 21 of the subject working vehicle 1A transmits the position information, image information and manipulation information to the remote device 30 via the in-vehicle communicator 23 (S112).

Specifically, referring back to FIG. 10A, after S12, the in-vehicle controller 21 determines whether there are remote manipulation signals from the remote device 30 (S13). The in-vehicle controller 21, upon receiving the remote manipulation signals from the remote device 30 via the in-vehicle communicator 23 (YES at S13), controls travel of the working vehicle 1, work performed by the working device 2, and other operations of the working vehicle 1 based on the sensing information from the sensing assembly 25, the detection information from the state detector 26, the detection information from the position detector 24 and the remote manipulation signals (S14).

The working vehicle 1 operates according to the remote manipulation signals from the remote device 30. That is, the in-vehicle controller 21 actuates the steering wheel 11a (FIG. 2), the accelerator pedal, the brake pedal, the shift lever 11d and/or the like of the manipulator 11 according to control signals corresponding to the operation of the steering wheel 35a, the accelerator pedal 35b, the brake pedal 35c and the shift lever 35d by the human remote manipulator.

As shown in FIG. 10B, the controller 31 of the remote device 30 displays an updated version of the remote operation screen G2 (S113). For example, the controller 31 performs a screen-updating process every time the controller 31 receives the correspondence data from the working vehicle 1 during the remote operation.

Specifically, the communicator 33 of the remote device 30 continuously receives the detection information from the position detector 24 and the state detector 26 and the sensing information from the sensing assembly 25 from the working vehicle 1. The communicator 33 continuously receives the correspondence data (that is, the correspondence data in which the image captured by the internal camera 25c1 and the position information relating to the working vehicle 1 detected by the position detector 24 are associated with each other) included in the detection information. The controller 31 updates the captured image displayed on the remote operation screen G2 to the captured image included in the correspondence data received by the communicator 33, and displays the updated version of the line K, which is the actual travel route indicated by the actual travel information corresponding to the position information (that is, the current position information relating to the working vehicle 1) included in the correspondence data, on the remote operation screen G2. The remote device 30 may be configured to, after the communicator 33 receives the captured image captured by the internal camera 25c1 and the position information relating to the working vehicle 1 detected by the position detector 24, associate the captured image and the position information with each other to obtain correspondence data.

The controller 31 determines whether or not the type of the line K is to be changed (S114). For example, if there is a "change" button in or on a manual operator in the vicinity of the operator's seat is operated to change the type of the line K (YES at S114), the controller 31 causes the display 34 to display the changed type of the line K which is shown in any of FIGS. 7B and 7C (S115).

Referring back to FIG. 10A, the in-vehicle controller 21 defines a region within a predetermined distance from the working vehicle 1 in the direction of travel of the working vehicle 1 as an emergency stop region. Thus, the in-vehicle controller 21, when an obstacle is detected in the emergency stop region based on the sensing information from the sensing assembly 25 when the working vehicle 1 is remotely operated by the remote device 30 to travel, causes the working vehicle 1 to perform an emergency stop automatically to avoid the contact of the working vehicle 1 with the obstacle (YES at S15), and returns to S12.

On the other hand, the in-vehicle controller 21, when no obstacles are detected in the emergency stop region (NO at S15), that is, when no obstacles are present within the emergency stop region, determines whether or not the remote operation is to end (S16). The in-vehicle controller 21, for example, when receiving an end signal for the remote operation from the remote device 30 (YES at S16), ends the remote operation. On the other hand, the in-vehicle controller 21, when not receiving the end signal for the remote operation from the remote device 30 (NO at S16), returns to S12.

Referring back to FIG. 10B, the controller 31 determines whether or not the remote operation is to end (S116). For example, the controller 31, when the position information relating to the working vehicle 1 remotely manipulated has not reached the end point on the actual travel route indicated by the actual travel information for the farm road FR (NO at S116), returns to S111. On the other hand, the controller 31, when the position information has reached the end point (YES at S116) or when receiving an instruction for ending the remote manipulation, ends the remote operation on the farm road FR.

In FIGS. 10A and 10B, the controller 31 causes the line K to be displayed in a superimposed manner on the remote operation screen G2 when remotely operating the subject working vehicle 1A on the farm road FR, but this does not imply any limitation. For example, the controller 31 may be configured or programmed to, when performing the remote manipulation relating to the agricultural field H1, transmit the request signal for the remote manipulation mode to the working vehicle 1 to cause the display 34 to display a line K as a travel route indicated by model travel information J relating to the agricultural field H1 (for example, actual travel information JA, etc.) Furthermore, the controller 31 may be configured or programmed to also cause the display 34 to display a line K on the farm road FR to the barn from the agricultural field H1. As such, the controller 31 may cause the line K to be displayed in a superimposed manner on the remote operation screen G2 when remotely operating the subject working vehicle 1A on the farm road FR between a barn and the agricultural field, when remotely operating the subject working vehicle 1A in the agricultural field H1, when remotely operating the subject working vehicle 1A on the farm road FR between the agricultural field and another agricultural field, when remotely operating the subject working vehicle 1A on the farm road FR between the agricultural field and the barn, and/or when remotely operating the subject working vehicle 1A on general roads other than the farm road FR.

Main characteristic features of and effects achieved by remote devices 30 and remote manipulation systems 100 in the above-described example embodiments and the like are as follows.

(Item A1) A remote device 30 including a remote manipulator 35 to remotely manipulate a working vehicle 1, a display 34 to display an image of an area in a direction of travel of the working vehicle 1 captured during remote manipulation, and a controller 31 configured or programmed to, according to information for teaching of remote manipulation of the working vehicle 1, cause the display 34 to display a travel route for the working vehicle 1 to travel and change a manner in which the travel route is displayed.

With the above-described item A1, it is possible for a human remote manipulator to check the travel route via the display 34, acquire information for teaching of the remote manipulation by looking at the manner in which the travel route is displayed on the display 34, and perform the remote manipulation indicated by the manner in which the line K is displayed. That is, it is possible to assist (support) the remote manipulation.

(Item A2) The remote device 30 according to item A1, wherein the controller 31 is configured or programmed to, when the information for teaching of remote manipulation includes a manipulation instruction, change the manner in which the travel route is displayed according to the manipulation instruction.

With the configuration of the above-described item A2, it is possible for a human remote manipulator to, by looking at the manner in which the travel route is displayed on the display 34, recognize the manipulation instruction indicated by the manner in which the travel route is displayed, making it possible to perform the remote manipulation such that the manipulation instruction indicated by the manner in which the travel route is displayed is achieved or substantially achieved.

(Item A3) The remote device 30 according to item A1 or A2, wherein the information for teaching of remote manipulation includes model travel information J including (i) a model travel route used as a model for the remote manipulation of the working vehicle 1 and (ii) model manipulation information including a manipulation instruction for the model travel route, and the controller 31 is configured or programmed to cause the display to display the model travel route in the form of a line K and change a manner in which the line K is displayed according to the model manipulation information for the model travel route.

With the above-described item A3, it is possible for a human remote manipulator to know the model travel route and the model manipulation information by looking at the line K displayed on the display 34, making it possible to perform the remote manipulation corresponding to or substantially corresponding to the model travel route and the model manipulation information.

(Item A4) The remote device 30 according to item A3, wherein the model travel information J is actual travel information JA including (i) a route actually traveled in a past by the working vehicle 1 manually operated or automatically operated and (ii) manipulation information including a manipulation instruction for the route, and the controller 31 is configured or programmed to cause the display to display the route in the form of a line K and change the manner in which the line K is displayed according to the manipulation information for the route.

With the above-described item A4, it is possible to display, on the display 34, a travel route actually traveled in the past by the working vehicle 1 manually operated or automatically operated and the manipulation information relating to the working vehicle 1 in the form of the line. Thus, it is possible to assist the remote manipulation by displaying the line indicating the model travel information relating to the manual operation or the remote operation.

(Item A5) The remote device 30 according to item A3, wherein the model travel information J is simulated travel information JS including (i) a route obtained when simulated operation of the working vehicle 1 was performed and (ii) manipulation information for the route, and the controller 31 is configured or programmed to cause the display to display the route in the form of a line K, and change the manner in which the line K is displayed according to the manipulation information for the route.

With this configuration of item A5, it is possible to display, on the display 34, the travel route obtained when the simulated operation of the working vehicle 1 was performed and the model manipulation information relating to the working vehicle 1 in the form of the line. Thus, it is possible to assist the remote manipulation by displaying the line indicating the model travel information relating to the simulated operation.

(Item A6) The remote device 30 according to item A4, wherein the actual travel information JA is information in which (i) one or more pieces of position information relating to the working vehicle 1 obtained when the working vehicle 1 was actually operated in the past by manual manipulation, remote manipulation or automatic manipulation, and (ii) one or more pieces of manipulation information corresponding to the respective one or more pieces of position information, are associated with each other.

With the above-described item A6, it is possible to display, on the display 34, the line K indicating the travel route based on the piece(s) of position information relating to the working vehicle 1 actually operated in the past by the manual manipulation, the remote manipulation or the automatic manipulation, and the piece(s) of manipulation information corresponding to the respective position(s) on the line K. This makes it possible to perform the remote manipulation corresponding to or substantially corresponding to the travel route which was actually traveled by the working vehicle 1 and the manipulation information relating to the working vehicle 1.

(Item A7) The remote device 30 according to item A5, wherein the simulated travel information JS is information in which (i) one or more pieces of position information for the model travel route obtained when the simulated operation of the working vehicle 1 was performed, and (ii) one or more pieces of manipulation information corresponding to the respective one or more pieces of position information, are associated with each other.

With the above-described item A7, it is possible to display, on the display 34, a line indicating the model travel route obtained when the simulated operation was performed and the piece(s) of manipulation information corresponding to the respective position(s) on the line. This makes it possible to perform the remote manipulation corresponding to or substantially corresponding to the travel route obtained when the simulated operation of the working vehicle 1 was performed and the manipulation information relating to the working vehicle 1.

(Item A8) The remote device 30 according to item A6 or A7, wherein the manipulation information includes information relating to at least one of a speed of the working vehicle 1, a shift position of a transmission 5 of the working vehicle 1, a brake position of a brake 13 of the working vehicle 1, or an operating position of a working device 2 provided on the working vehicle 1.

With the above-described item A8, it is possible to display, on the display 34, the line K in a manner that changes according to the information relating to at least one of the speed of the working vehicle 1, the shift position of the transmission 5, the brake position of the brake 13, or the operating position of the working device 2. For example, it is possible to display, in the form of the line K, information relating to the speed, information relating to the shift position, information relating to the brake position, or operation information relating to the working device 2 (the raising, lowering or the like of the working device 2).

(Item A9) The remote device 30 according to item A8, wherein the controller 31 is configured or programmed to, according to the manipulation information, change the manner in which the line K is displayed by changing at least one of a size, a color, a density, a shape or a pattern of the line.

With the above-described item A9, since at least one of the size, the color, the density, the shape or the pattern of the line K displayed on the display 34 changes, it is possible for a human remote manipulator to know, from the change in the manner in which the line K is displayed, the manipulation information that is associated with the changed manner in which the line K is displayed, i.e., the size, the color, the density, the shape and/or the pattern, and perform manipulation according to the manipulation information obtained from the line K displayed in a manner that changes, making it possible to assist (support) the remote manipulation.

(Item A10) The remote device 30 according to item A7, further including a communicator 33 to receive position information relating to the working vehicle 1 and the captured image, wherein the controller 31 is configured or programmed to, when the remote manipulator 35 remotely manipulates the working vehicle 1, generate model travel information J including a position indicated by current position information relating to the working vehicle 1 received by the communicator 33, and cause the display 34 to display, in the form of the line K, the model travel route indicated by the generated model travel information J.

With the above-described item A10, it is possible for a human remote manipulator to perform the remote manipulation while looking at the model travel route generated by performing the simulated operation concurrently with the remote manipulation.

(Item A11) The remote device 30 according to item A6 or A7, further including a communicator 33 to receive position information relating to the working vehicle 1 and the captured image, and a memory and/or a storage 32 to store one or more pieces of the model travel information J in advance, wherein the controller 31 is configured or programmed to, when the remote manipulator 35 remotely manipulates the working vehicle 1, select one of the one or more pieces of model travel information J that relates to a target range including a position indicated by current position information relating to the working vehicle 1 received by the communicator 33, and cause the display 34 to display, in the form of the line K, the model travel route indicated by the selected one of the one or more pieces of model travel information J.

With the above-described item A10, it is possible for a human remote manipulator to perform the remote manipulation using the model travel information close to the working vehicle during the remote manipulation.

(Item A12) The remote device 30 according to any one of items A1 to A11, wherein the captured image is an image of an area in the direction of travel of the working vehicle 1 captured by a camera 25c (imager) provided inside or outside a protection structure surrounding an operator's seat 10.

With the above-described item A12, it is possible to display the line K in a manner that changes according to the manipulation information of the actual travel information on the captured image of the area in the direction of travel of the working vehicle 1 captured from the operator's seat 10 or the protection structure (cabin 9, ROPS or the like) surrounding the operator's seat 10, making it possible for the human remote manipulator to remotely manipulate the working vehicle 1 according to the line K as if they were sitting on the operator's seat 10 of the working vehicle 1 in a remote place. This makes it possible for the human remote manipulator to receive assistance from the past line K of the working vehicle 1.

(Item A13) The remote device 30 according to item A11, further including a notifier 36, wherein the controller 31 is configured or programmed to, when the working vehicle 1 remotely manipulated by the remote manipulator 35 deviates from the line K, cause the notifier 36 to provide a notification indicating the deviation from the line K, and, when manipulation information used to remotely manipulate the working vehicle 1 deviates from manipulation information obtained when the working vehicle 1 was actually operated in the past, cause the notifier 36 to provide a notification indicating the deviation of the manipulation information.

With the above-described item A13, it is possible to, if the working vehicle 1 remotely operated deviates from the line K while traveling, provide a notification indicating the deviation to a human remote manipulator. Furthermore, it is possible to, if the manipulation information relating to the working vehicle 1 remotely operated deviates from the manipulation information indicated by the line K, provide a notification indicating the deviation of the manipulation information. This makes it possible to allow the human manipulator to follow the travel route and the content of manipulation based on the line K as a guideline.

(Item A14) The remote device 30 according to item A13, wherein the controller 31 is configured or programmed to, when the working vehicle 1 is in a vicinity of a position on the line K that is for operation of a working device or a device of the working vehicle, cause the notifier 36 to provide a notification indicating that the working vehicle 1 is at the position for operation of the working device or the device of the working vehicle.

With the above-described item A14, it is possible to, when the working vehicle 1 remotely operated is in the vicinity of the position for operation of the working device 2 (for example, when the working vehicle 1 is in the vicinity of a position at which an implement is to be raised), provide a notification (display on a screen, output a voice or the like) to a human remote manipulator in advance. This makes it possible to improve the assurance of control.

(Item A15) The remote device 30 according to item A13, wherein the memory and/or the storage 32 is/are operable to store, in advance, informative information in which a past route HR traveled by a moving body other than the working vehicle 1 and warning information WM are associated with each other, and the controller 31 is configured or programmed to, when the working vehicle 1 remotely manipulated is positioned within a predetermined distance from the past route HR traveled by the moving body, cause the display 34 to display at least one of the past route HR traveled by the moving body or the warning information WM.

With the above-described item A15, it is possible to provide a notification indicating danger relating to moving bodes other than the working vehicle 1 in advance.

(Item A16) The remote device 30 according to item A9, wherein the controller 31 is configured or programmed to cause the display to display the line K based on a reference position which is a wheel position of the working vehicle 1, a widthwise center of the working vehicle 1, a widthwise center of an operator's seat 10 provided on the working vehicle 1, or a maximum width of the working vehicle 1.

With the above-described item A16, it is possible to display the line K based on each reference position.

(Item A17) The remote device 30 according to item A16, wherein the controller 31 is configured or programmed to, when a human remote manipulator performs a selection operation to select the reference position which is the wheel position of the working vehicle 1, the widthwise center of the working vehicle 1, the widthwise center of the operator's seat 10 provided on the working vehicle 1, the maximum width of the working vehicle 1, or a maximum width of an assembly of the working vehicle 1 and the working device 2 provided on the working vehicle 1, cause the display to display the line K at the selected reference position as a start point.

With the above-described item A17, the human remote manipulator appropriately selects the reference position which is the wheel position of the working vehicle 1, the widthwise center of the working vehicle 1, the widthwise center of the operator's seat 10, the maximum width of the working vehicle 1, or the maximum width of an assembly of the working vehicle 1 and the working device 2, making it possible to appropriately change the reference position of the line K, appropriately change the line K such that he line K is easily viewable to the human remote manipulator according to the travel situation of the working vehicle 1 or work performed by the working vehicle 1, and further increase the degree of freedom for displaying the line K.

The controller 31, upon receiving a selection instruction from the human remote manipulator at S108 shown in FIG. 10B, based on the selection instruction, selects a model travel route stored in the storing device 32 and causes the display 34 to display the model travel route in the form of the line K on the remote operation screen G2. With this configuration, it is possible to cause the display 34 to display the actual travel information (or the actual travel information group) designated by the user (human remote manipulator) regardless of the current position information relating to the subject working vehicle 1A.

(Item A18) A remote manipulation system 100 including a working vehicle 1 and the remote device 30 according to any one of items A1 to A17, wherein the working vehicle 1 includes a position detector 24 to detect a position of the working vehicle 1, a camera 25c (imager) to capture an image of an area in a direction of travel of the working vehicle 1, and an in-vehicle communicator 23 to transmit position information indicating the position detected by the position detector 24 and a captured image captured by the camera 25c such that the position information and the captured image are associated with each other, the remote device 30 includes a communicator 33 to receive the position information and the captured image, and the controller 31 is configured or programmed to, according to information for teaching of remote manipulation of the working vehicle 1, cause the display 34 to display a travel route for the working vehicle to travel and change a manner in which the travel route is displayed.

With the above-described item A18, it is possible for a human remote manipulator to, by looking at the manner in which the travel route is displayed on the display 34, know the content of the manipulation indicated by the manner in which the travel route is displayed, and perform the remote manipulation indicated by the manner in which the line K is displayed. This makes it possible to assist (support) the remote manipulation.

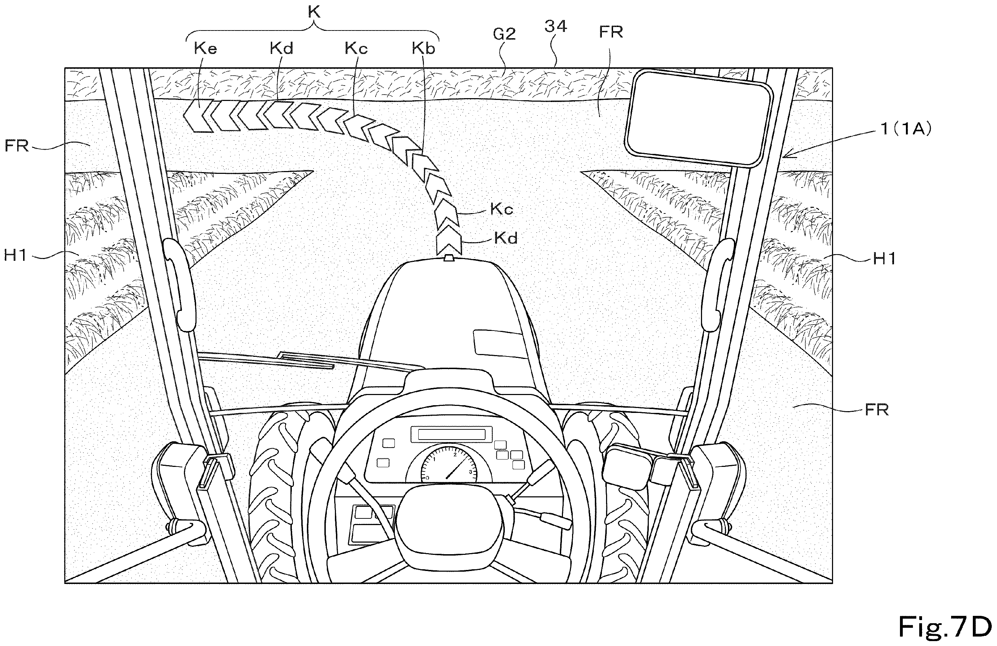

As shown in FIG. 7D, when the manipulation information included in the model travel information J (such as actual travel information JA, simulated travel information JS) indicates the speed of the working vehicle 1, the controller 31 may increase the size of the line K (for example, width of the line K increases) as the speed increases and reduce the size of the line K (for example, width of the line K decreases) as the speed decreases. In FIG. 7D, the width of the line K is as follows: the indicator Kb < the indicator Kc < the indicator Kd < the indicator Ke. With this configuration, it is possible to approximately know the speed from the size of the line K (the size of the width).

When performing the remote operation of the working vehicle from outside the agricultural field, it is difficult to check the surroundings or the like compared to when actually operating the working vehicle in the working vehicle. It is therefore sometimes difficult to determine whether the road is passable by the working vehicle (through a screen).

Specifically, when performing the remote operation of the working vehicle from outside the agricultural field, it is difficult to check the surroundings or the like compared to when actually operating the working vehicle in the working vehicle. It is therefore sometimes difficult to determine whether the working vehicle can pass the road (through the screen). In this regard, it can be said that the route that has been actually traveled in the past (the route that has been traveled by manual operation or remote operation in the past) is likely to be travelable, which may help the human remote operator in making decisions. In addition to the route, understanding what operations (a brake, a speed or the like) have been performed on the route in the past would provide help in determining an appropriate operation. In view of this, with the remote manipulation system 100 of the present example embodiment, it is possible to provide support to determine appropriate operations.

Therefore, although the storage table TB1 shown in FIG. 4A includes the simulated travel information JS, the storage table TB1 may include only the actual travel information JA. Alternatively, the controller 31 may make a selection from only piece(s) of actual travel information JA in the storage table TB1 shown in FIG. 4A. With this, it is possible to appropriately select actual travel information JA.

Main characteristics items of and effects achieved by remote devices 30 and remote manipulation systems 100 in the above-described example embodiments and the like are as follows.

(Item B1) A remote device 30 including a remote manipulator 35 to remotely manipulate a working vehicle 1, a display 34 to display an image of an area in a direction of travel of the working vehicle 1 captured during remote manipulation, and a controller 31 configured or programmed to cause the display 34 to display actual travel information JA at least during remote manipulation of the working vehicle 1.

With the above-described item B1, it is possible for a human remote manipulator to perform the remote manipulation while looking at the actual travel route displayed on the display 34 when remotely manipulating the working vehicle 1. That is, it is possible to assist (support) the remote manipulation.

(Item B2) The remote device 30 according to item B1, wherein the actual travel information JA includes information indicating a route actually traveled in a past by the working vehicle 1 manually operated or automatically operated.

With the above-described item B2, it is possible to display, on the display 34, the route (for example, line K) actually traveled in the past by the working vehicle 1 manually operated or automatically operated, making it possible to assist the remote manipulation using the line K of the manual operation or automatic operation in the past.

(Item B3) The remote device 30 according to item B1 or B2, wherein the actual travel information JA is not information relating to a route and manipulation of the working vehicle 1A remotely manipulated currently by a human remote manipulator, but is information relating to a route and manipulation of another vehicle 1B other than the working vehicle 1A remotely manipulated currently .

With the above-described item B3, it is possible to perform the remote manipulation while looking at the actual travel information JA relating to the route and the manipulation of the other vehicle 1B other than the subject working vehicle 1A during remote manipulation.

(Item B4) The remote device 30 according to any one of items B1 to B3, wherein information relating to a route and manipulation relating to a manual operation included in the actual travel information JA is information relating to a route and manipulation obtained when the other vehicle 1B was manually operated by a driver in the other vehicle 1B or when the other vehicle 1B was remotely operated manually by the human remote manipulator not in the other vehicle 1B.

With the above-described item B4, it is possible to provide the human remote manipulator with information relating to the route and the manipulation obtained when the other vehicle 1B was actually operated manually, making it possible to assist the remote manipulation.

(Item B5) The remote device 30 according to any one of items B1 to B4, wherein the display 34 is operable to display the captured image on a remote operation screen G2, and the controller 31 is configured or programmed to display a line K in a superimposed manner on the captured image on the remote operation screen G2, the line K being an actual travel route which was passed by the manual operation and which is included in the actual travel information.

With the above-described item B5, it is possible for a human remote manipulator to look at the line K superimposed on the captured image on the remote operation screen G2 and check the actual travel route while performing the remote manipulation, making it possible to assist (support) the remote manipulation.

(Item B6) The remote device 30 according to item B5, further including a memory and/or a storage 32 to store one or more pieces of the actual travel information JA, wherein the controller 31 is configured or programmed to, based on a selection instruction from the human remote manipulator, select one of the one or more pieces of actual travel information JA stored in the memory and/or the storage 32 and cause the display 34 to display, as the path (line K), a route indicated by the selected one of the one or more pieces of actual travel information JA on the remote operation screen G2.

With the above-described item B6, a human remote manipulator selects any one of the at least one piece of actual travel information JA, and the route indicated by the selected one of the at least one piece of actual travel information JA is displayed in the form of the line K on the remote operation screen G2 of the display 34, making it possible for the human remote manipulator to perform the remote manipulation while looking at the manner in which the line K is displayed, and to remotely manipulate the working vehicle 1 following the actual travel route.

(Item B7) The remote device 30 according to item B5 or B6, further including a memory and/or a storage 32 to store one or more pieces of the actual travel information JA and a communicator 33 to receive position information relating to the working vehicle 1 and the captured image, wherein each of the one or more pieces of actual travel information JA includes information in which manipulation information obtained when the working vehicle 1 or the other vehicle 1 was actually operated and position information relating to the working vehicle 1 or the other vehicle 1 are associated with each other, and the controller 31 is configured or programmed to, when the remote manipulator 35 remotely manipulates the working vehicle 1, select, from the memory and/or the storage 32, one of the one or more pieces of actual travel information JA that is associated with a target range including a position indicated by current position information relating to the working vehicle 1 received by the communicator 33, and cause the display 34 to display, as the path, the actual travel route indicated by the selected one of the one or more pieces of actual travel information JA on the remote operation screen.

With the above-described item B7, it is possible for a human remote manipulator to perform the remote manipulation using the actual travel information JA close to the working vehicle during remote manipulation.

(Item B8) The remote device 30 according to any one of items B1 to B7, wherein the captured image is an image of the area in the direction of travel of the working vehicle 1 captured by a camera 25c (imager) provided inside or outside a protection structure surrounding an operator's seat provided on the working vehicle 1.

With the above-described item B8, it is possible to display the line K in the manner that changes according to the manipulation information included in the actual travel information on the image of the area in the direction of travel of the working vehicle 1 captured from the operator's seat 10 or the protection structure (cabin 9, ROPS or the like) surrounding the operator's seat 10, making it possible for the human remote operator to perform the remote manipulation according to the line K as if they were sitting on the operator's seat 10 of the working vehicle 1 in a remote place, and receive assistance from the line K traveled in the past by the working vehicle 1.

(Item B9) The remote device 30 according to item B5 or B6, further including a memory and/or a storage 32 to store one or more pieces of the actual travel information JA including respective one or more actual travel routes, wherein the controller 31 is configured or programmed to select one of the one or more actual travel routes stored in the memory and/or the storage 32 based on priority information, and cause the display 34 to display the selected one of the one or more actual travel routes as the path (line K) on the remote operation screen G2.

With the above-described item B9, it is possible to cause the display 34 to preferentially display, in the form of the line K, one of the at least one actual travel route stored in the storing device 32 that has high priority. This makes it possible to display the line K having high reliability as a guideline.

(Item B10) The remote device according to item B9, wherein the memory and/or the storage 32 is operable to store a plurality of the pieces of actual travel information JA, and the controller 31 is configured or programmed to cause the display 34 to display a latest one of the plurality of pieces of actual travel information JA stored in the memory and/or the storage 32 as a first path (first line K1) with a first transparency level, and cause the display 34 to display, on the remote operation screen G2, one or more of the plurality of pieces of actual travel information JA that are other than the latest one of the plurality of pieces of actual travel information JA as a second path (second line K2) with a second transparency level, the second transparency level being higher than the first transparency level.

With the above-described item B10, it is possible to cause the display 34 to display the latest one of the plurality of pieces of past actual travel information JA stored in the storing device 32 as the first line K1 with the first transparency level, and one or more of the plurality of pieces of actual travel information JA that are other than the latest one of the plurality of pieces of actual travel information JA as the second line K2 with the second transparency level higher than the first transparency level, making it possible to display the latest one of the plurality of pieces of actual travel information JA having higher reliability preferentially while displaying the plurality of lines K (that is, the first line K and the second line K) traveled in the past. This makes it possible to indicate the distribution of the plurality of lines K and clearly indicate the latest actual travel information JA having high reliability.

(Item B11) A remote manipulation system 100 including a working vehicle 1, and the remote device 30 according to any one of items B1 to B10, wherein the working vehicle 1 includes a position detector 24 to detect a position of the working vehicle 1, a camera 25c (imager) to capture an image of an area in a direction of travel of the working vehicle 1, and an in-vehicle communicator 23 to transmit position information indicating the position detected by the position detector 24 and the captured image captured by the camera 25c such that the position information and the captured image are associated with each other, the remote device 30 includes a communicator 33 to receive the position information and the captured image, and the controller 31 is configured or programmed to cause the display 34 to display actual travel information JA at least during remote manipulation of the working vehicle 1.

With the above-described item B11, it is possible for a human remote manipulator to, when remotely manipulating the working vehicle 1, perform the remote manipulation while looking at the actual travel route displayed on the display 34. This makes it possible to assist (support) the remote manipulation.

### First Variation

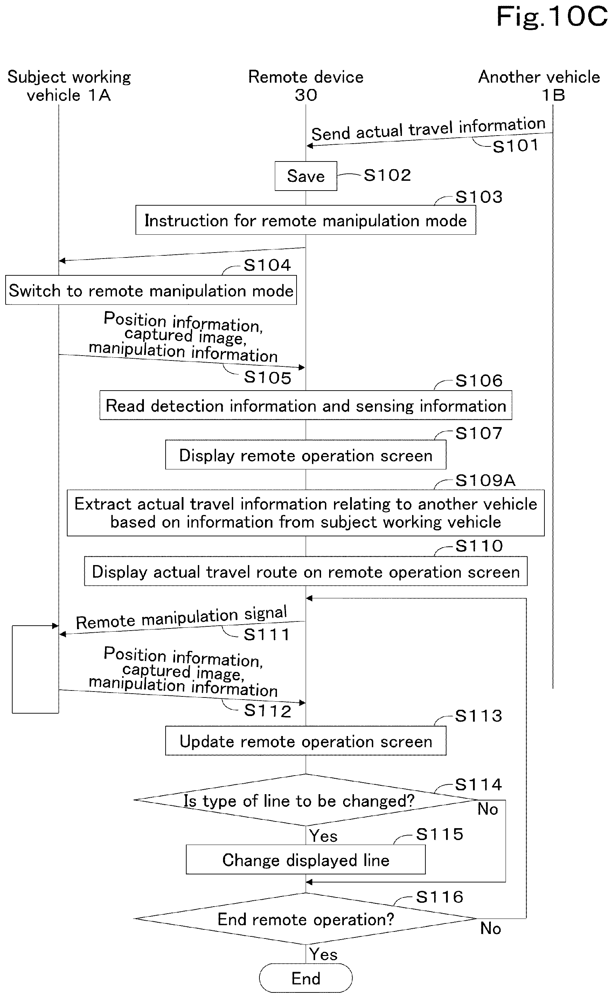

Although the remote device 30 of the above-described example embodiments selects model travel information J according to the operation by a human remote manipulator (S108 in FIG. 10B), as shown in FIG. 10C, the remote device 30 of a first variation is different from the remote device 30 of the above-described example embodiments in that it is possible to select model travel information J close to the position of the subject working vehicle 1A.

As shown in FIG. 10C, the controller 31 of the remote device 30 extracts actual travel information JA relating to the other vehicle 1B based on information from the subject working vehicle 1A (S109A). Specifically, the controller 31, when the remote manipulator 35 remotely manipulates the subject working vehicle 1A (working vehicle 1), selects one of piece(s) of model travel information J (which may be actual travel information JA) that relates to a target range including a position indicated by the current position information relating to the subject working vehicle 1A received by the communicator 33. Assume here that the controller 31 selects the model travel information which is partially positioned within a target range (for example, a range within 20 meters) including the current position of the subject working vehicle 1A. That is, the controller 31 selects the model travel information J close to the position of the subject working vehicle 1A.

Although the model travel information J that relates to the target range is the model travel information relating to a range within the predetermined distance (for example, 20 meters) from the position of the subject working vehicle 1A, the model travel information J may be any model travel information, provided that the information matches the current position of the subject working vehicle 1A. The model travel information J that relates to the target range may be the model travel information relating to the agricultural field H1 where the subject working vehicle 1A is positioned or the model travel information relating to the farm road FR where the subject working vehicle 1A is positioned, etc.

The controller 31 displays the model travel route (actual travel route in the present embodiment) indicated by the selected model travel information J, in the form of the line K, in a superimposed manner as shown in FIG. 7A, on the captured image displayed on the remote operation screen G2 (S110).

In the first variation, the remote device 30 includes the communicator 33 to receive the position information relating to the working vehicle 1 and the captured image, and the storing device 32 to store one or more pieces of the model travel information in advance. The controller 31, when the remote manipulator 35 remotely manipulates the working vehicle 1, selects one of the one or more pieces of the model travel information J that relates to the target range including a position indicated by the current position information relating to the working vehicle 1 received by the communicator 33, and causes the display 34 to display the model travel route indicated by the selected one of the one or more pieces of the model travel information J in the form of the line K.

With this configuration of the first variation, it is possible for a human remote manipulator to perform the remote manipulation using the model travel information close to the working vehicle during remote manipulation.

### Second Variation

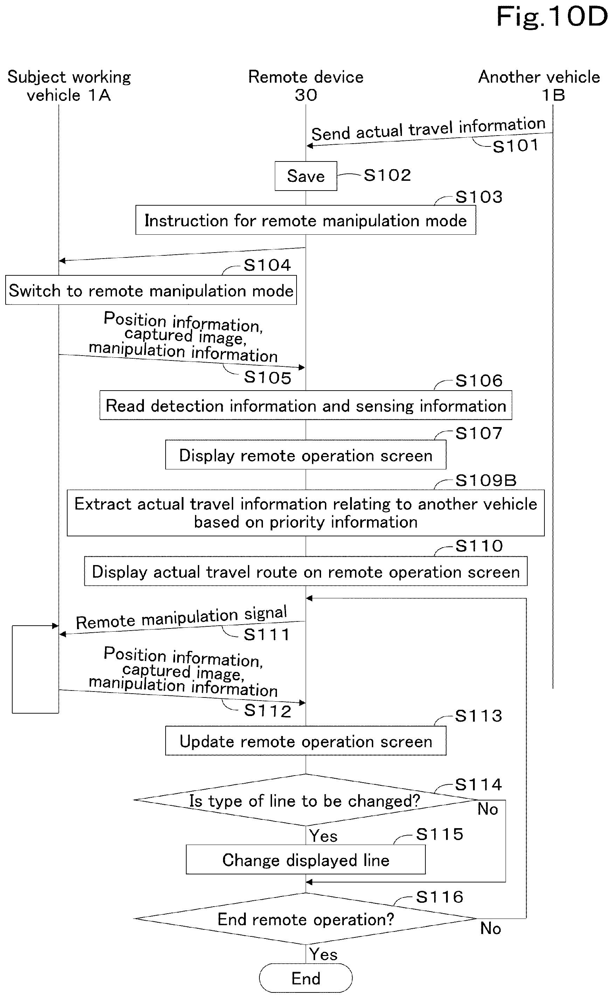

Although the remote device 30 of the above-described example embodiments selects the model travel information J according to the operation of a human remote manipulator (S108 in FIG. 10B), as shown in FIG. 10D, the remote device 30 of a second variation is different from the remote device 30 of the above-described example embodiments and the first variation in that it is possible to select the model travel information J based on priority information.

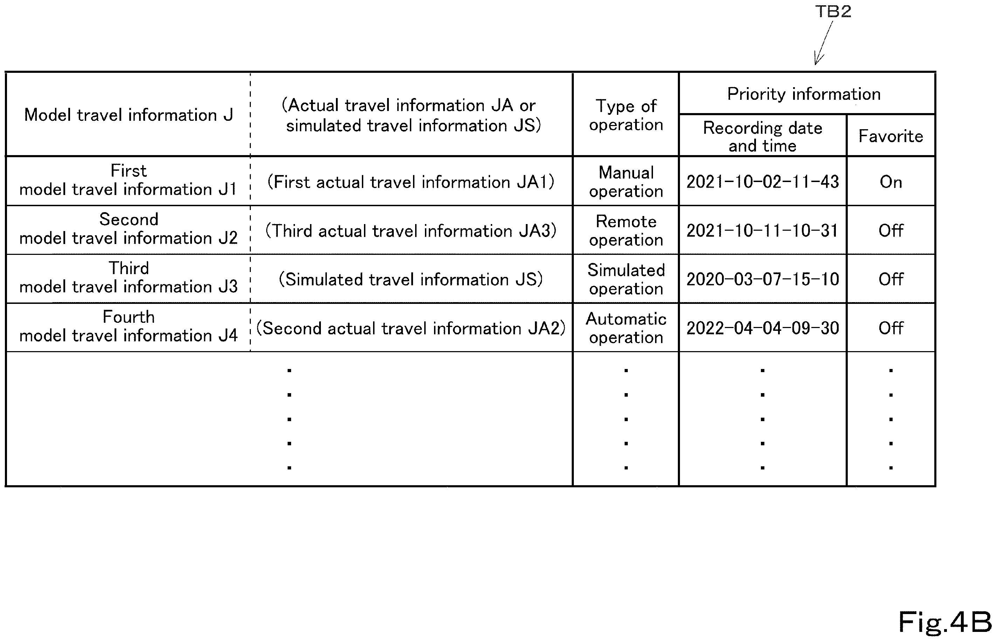

FIG. 4B illustrates an example of a storage table of the second variation. As shown in FIG. 4B, the storage table TB2 included in the storing device 32 stores a plurality of pieces of the model travel information J. The first to fourth model travel information J1 to J4 stored are associated with pieces of priority information. For example, the priority information indicates recording date and time. The recording date and time indicate the date and time when the working vehicle 1 was operated manually or automatically, or the date and time when the simulated operation of the working vehicle 1 was performed. The storage table TB2 is operable to store the priority information (for example, the information indicating the recording date and time) indicating that the latest model travel information J has the highest priority.

As shown in FIG. 10D, the controller 31 of the remote device 30 extracts one piece of the model travel information J relating to the other vehicle 1B based on the priority information (S109B). For example, the controller 31 causes the display 34 to display the latest one of a plurality of pieces of the model travel information J stored in the storing device 32 in the form of the line K on the remote operation screen G2. That is, the recording date and time of the second model travel information J2 is the latest, and the second model travel information J2 is thus displayed in the form of the line K on the remote operation screen G2.

The controller 31 then causes the display 34 to display the model travel route indicated by the second model travel information J2 extracted based on the priority information in the form of the line K on the remote operation screen G2 (S110).

As shown in FIG. 4B, favorites information may be included in the priority information. The favorites information is such that, when ON is set with respect to at least one piece of model travel information J that a human remote manipulator wishes to prioritize and OFF is set with respect to the other piece(s) of the model travel information J, the model travel information J provided with the favorites information of ON is selected preferentially regardless of the recording date and time. For example, the favorites information about the first model travel information J1 is ON, and the favorites information about the second to fourth model travel information J2 to J4 are all OFF. Thus, the first model travel information J1 with the favorite information of ON, instead of the second model travel information J2 having the latest recording date and time, may be displayed in the form of the line K on the remote operation screen G2 of the display 34.

In the second variation, the remote device 30 includes the storing device 32 to store at least one piece of the model travel information J (for example, the actual travel information JA, the simulated travel information JS). The controller 31, based on the priority information, selects a piece of model travel information J (for example, the actual travel information JA, the simulated travel information JS) stored in the storing device 32, and causes the display 34 to display the model travel route (for example, the actual travel route, the simulated travel route) in the form of the line K on the remote operation screen G2.

With this configuration of the second variation, it is possible to cause the display 34 to preferentially display, in the form of the line K, the model travel route (for example, the actual travel route, the simulated travel route) having the high priority of the at least one piece of the model travel information J (for example, the actual travel information JA, the simulated travel information JS) stored in the storing device 32. This makes it possible to display the line K having the higher reliability as a guideline.

### Third Variation

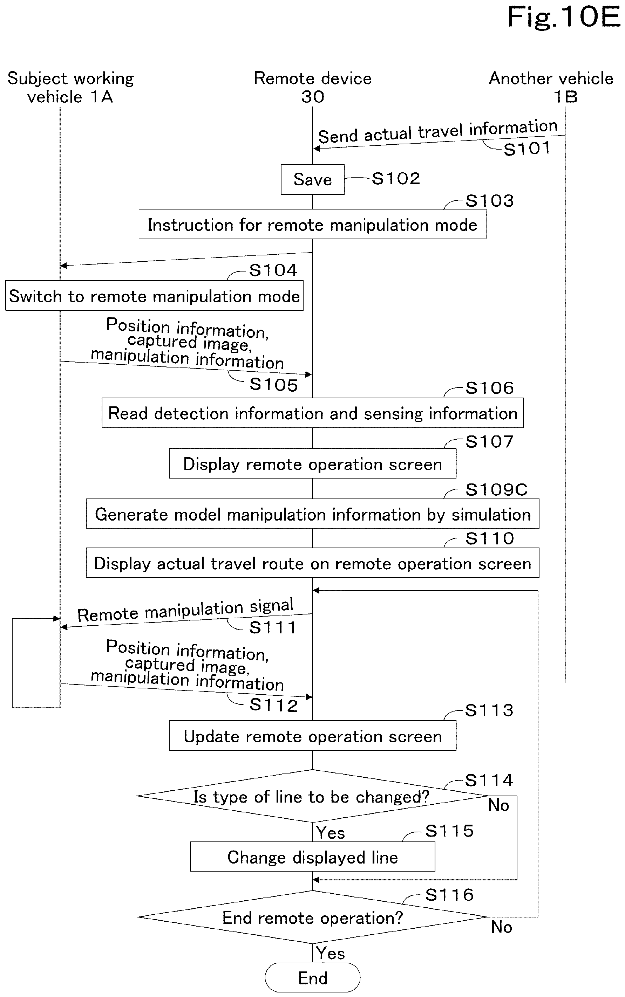

Although the remote device 30 of the above-described example embodiments and the first and second variations selects the model travel information J (for example, the actual travel information JA, the simulated travel information JS) stored in the storing device 32, as shown in FIG. 10E, the remote device 30 of a third variation is different from the remote device 30 of the above-described example embodiments and the first and second variations in that it is possible to display the model travel information J generated by performing the simulated operation concurrently with the remote manipulation.

The controller 31 generates the model travel information including the position indicated by the current position information relating to the working vehicle 1 received by the communicator 33 when the remote manipulator 35 remotely manipulates the working vehicle 1.

Specifically, the controller 31 determines the farm road FR in the captured image by subjecting the captured image received by the communicator 33 to image analysis. The controller 31, based on the determined farm road FR, creates a model travel route extending along the length direction of the farm road FR through the widthwise center of the determined farm road FR from the widthwise center of the working vehicle 1 in the captured image, and generates model travel information including model manipulation information indicating pieces of manipulation information (speed, presence or absence of braking, switching speed stages, and/or the like) corresponding to respective positions on the model travel route according to the shape (for example, straight, curved or winding road, increase or decrease in the width of the road, and/or the like) and the road conditions (flat, uneven and/or the like) of the farm road FR.

The controller 31 may generate the model travel information by converting the model travel route included in the model travel information J close to the position of the subject working vehicle 1A (working vehicle 1) of the first variation into the travel route based on the position of the subject working vehicle 1A as a reference point.

As shown in FIG. 10E, the controller 31 of the remote device 30 generates the model travel information by performing simulation concurrently with the remote manipulation, that is, generates simulated travel information (S 109C).

The remote manipulation system 100 of the third variation includes the communicator 33 to receive the position information relating to the working vehicle 1 and the captured image. The controller 31, when the remote manipulator 35 remotely manipulates the working vehicle 1, generates the model travel information including the position indicated by the current position information relating to the working vehicle 1 received by the communicator 33, and causes the display 34 to display the model travel route indicated by the generated model travel information in the form of the line K on the remote operation screen G2.

In other words, the controller 31, while acquiring the travel information relating to the remote operation, generates one or more pieces of position information for the model travel route obtained when the simulated operation of the working vehicle 1 is performed and one or more pieces of model manipulation information corresponding to the respective one or more pieces of position information, and causes the display 34 to display the position information and the model manipulation information on the remote operation screen G2. That is, the controller 31 generates the model travel route by performing simulation concurrently with the remote manipulation and causes the display 34 to display the model travel route.

With the third variation, in this case, it is possible for a human remote manipulator to perform the remote manipulation while looking at the model travel route generated by performing simulation concurrently with the remote manipulation.

### Fourth Variation

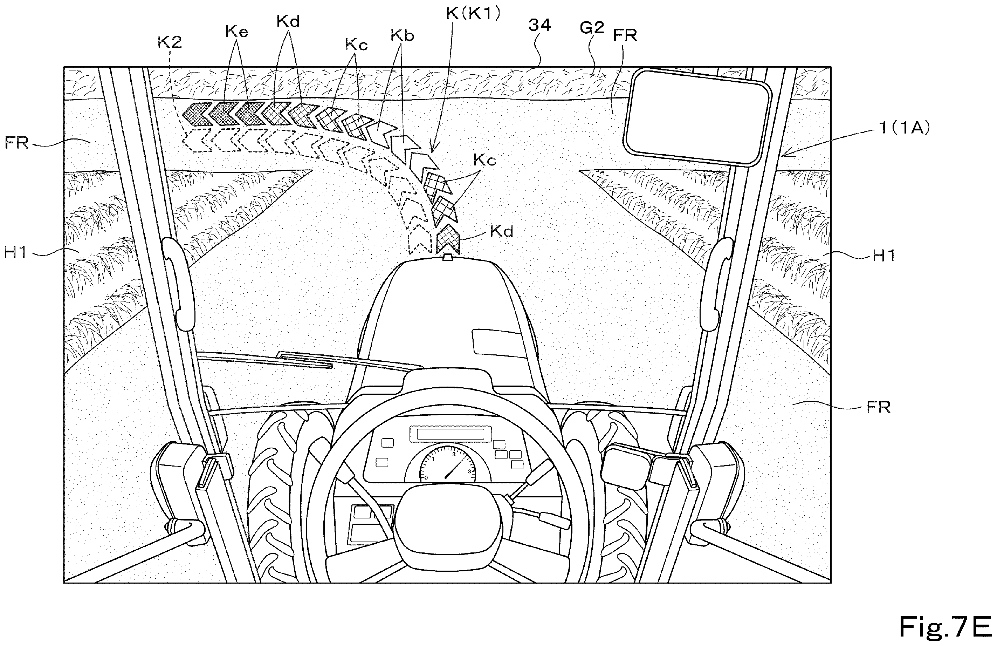

Although the remote device 30 of the above-described example embodiments and the first to third variations displays a single line K in a superimposed manner on the remote operation screen G2 as shown in FIG. 7A, the remote device 30 of a fourth variation is different from the remote device 30 of the above-described example embodiments in that it is possible to display a plurality of lines K (for example, a first line K1 and a second line K2) together in a superimposed manner on the remote operation screen G2, as shown in FIG. 7E.

As shown in FIG. 4, the storing device 32 stores a plurality of pieces of actual travel information JA. As shown in FIG. 7E, the controller 31 of the remote device 30 of the fourth variation causes the display 34 to display the latest one of the plurality of pieces of actual travel information JA stored in the storing device 32 as the first line K1 with a first transparency level, and causes the display 34 to display one or more of the plurality of pieces of actual travel information JA that are other than the latest one of the plurality of pieces of actual travel information JA as the second line K2 with a second transparency level. The second transparency level is higher than the first transparency level.

In FIG. 4, the second actual travel information JA2 is the latest one, and the second actual travel information JA2 is thus displayed as the first line K1 with the first transparency level, and the first actual travel information JA1 is displayed as the second line K2 with the second transparency level.

With this configuration of the fourth variation, the controller 31 causes the display 34 to display the latest one of the plurality of pieces of the past actual travel information JA stored in the storing device 32 as the first line K1 with the first transparency level, and display the one or more of the plurality of pieces of actual travel information JA that are other than the latest one of the plurality of pieces of actual travel information JA as the second line K2 with the second transparency level higher than the first transparency level, making it possible to display the plurality of past lines K (that is, the first line K1 and the second line K2) while displaying the latest one of the plurality of pieces of actual travel information JA having high reliability in a prioritized manner. With this, it is possible to distinctly indicate the latest one of the plurality of pieces of actual travel information JA having high reliability while indicating the distribution of the plurality of lines K.

### Fifth Variation

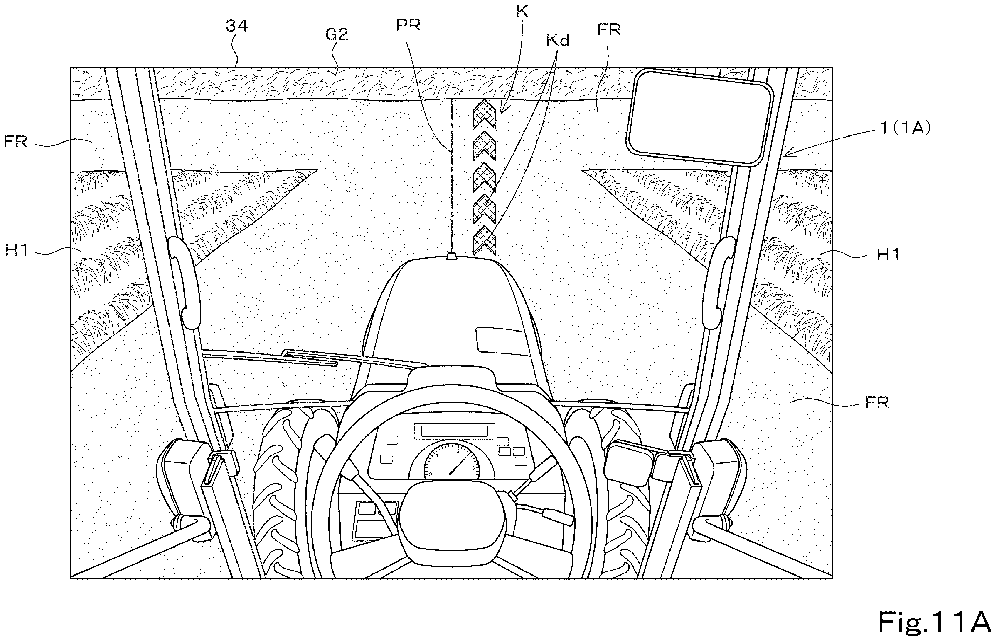

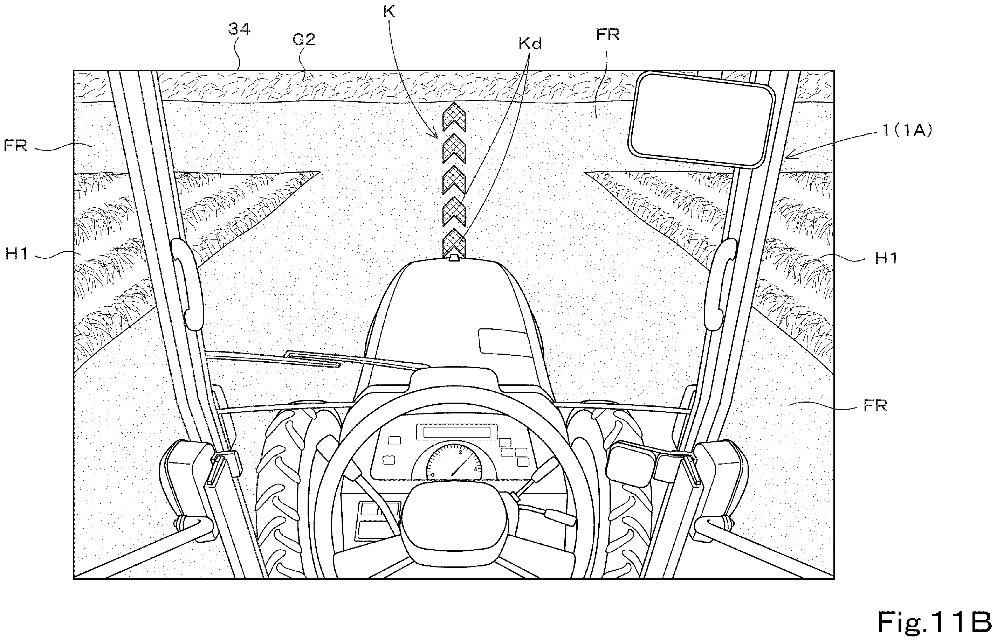

As shown in FIGS. 11A and 11B, the remote device 30 of a fifth variation is different from the remote device 30 of the above-described example embodiments and the first to fourth variations in that it is possible to provide a notification when the working vehicle 1 remotely operated is deviating from the line K. The meaning of "deviation from the line K" includes the deviation of the vehicle position and the deviation of the manipulation information. It is noted that the remote device 30 may provide a notification indicating at least one of the deviation of the vehicle position or the deviation of the manipulation information. The deviation of the manipulation information refers to the deviation of the manipulation information used to remotely manipulate the working vehicle 1 from the manipulation information obtained when the working vehicle 1 was actually operated in the past.

The notifier 36 provides a notification indicating the deviation from the line K. When the working vehicle 1 remotely manipulated by the remote manipulator 35 deviates from the line K, the controller 31 causes the notifier 36 to provide a notification indicating the deviation from the line K.

For example, when the working vehicle 1 deviates from the line K, the notifier 36 provides a notification indicating the deviation from the line K by causing the display 34 to change the manner in which the line K is displayed to a manner different from the normal one and/or by outputting a notification via sound from a speaker 36a.

Specifically, as shown in FIG. 11A, the controller 31 determines whether or not a line PR indicating the travel route to be traveled by the working vehicle 1 remotely operated deviates from the line K displayed on the remote operation screen G2 by a predetermined value or more. The line PR extends in the direction of travel from the current position of the subject working vehicle 1A. For example, the controller 31 determines that the working vehicle 1 deviates from the line K when the interval between the line PR and the line K is equal to or more than the predetermined value. The controller 31, when determining that the working vehicle 1 deviates from the line K, causes the notifier 36 to provide a notification indicating the deviation from the line K by outputting sound and/or causing the display 34 to provide a notification indicating the deviation from the line K by displaying the line K in a first display pattern (for example, flashing at first interval(s)). For example, the notifier 36 outputs the voice indicating that "the working vehicle is deviating from the line K."

As shown in FIG. 11B, the controller 31 causes the notifier 36 to provide a notification indicating the deviation from the manipulation information indicated by the line K when the manipulation information relating to the working vehicle 1 remotely operated deviates from the manipulation information indicated by the line K displayed on the remote operation screen G2 by a predetermined value or more in terms of the content of the manipulation information. Examples of the deviation of the predetermined value or more in terms of the content of manipulation information include the deviation of the travel speed, the deviation of the shift position, the deviation of the brake position, the deviation of the operating position of the working device 2 and the like.

When the travel speed (for example, speed SD5) of the working vehicle 1 remotely manipulated deviates from the travel speed (for example, speed SD3) included in the manipulation information indicated by the line K by the predetermined value or more, the controller 31 provides a notification indicating the deviation of the travel speed (for example, "please change the travel speed to the speed SD3") by outputting sound and/or displaying the line K in a second display pattern (for example, flashing at second interval(s)). In FIG. 11B, the line PR coincides with the line K, but the content of the manipulation information relating to the subject working vehicle 1A deviates from the content of the manipulation information indicated by the line K, and the line K is thus displayed in the second display pattern.

When the shift position (for example, the second shift position) of the working vehicle 1 remotely manipulated deviates from the shift position (for example, the first shift position) included in the manipulation information indicated by the line K by a predetermined value or more (that is, the shift positions are not the same), the controller 31 provides a notification indicating the deviation of the shift position (for example, "please switch the shift position to the first shift position") by outputting sound and/or by displaying the line K in a third display pattern (for example, flashing at speed-change interval(s)).

When the brake position (for example, the brake is off) of the brake 13 of the working vehicle 1 remotely manipulated deviates from the brake position (for example, the brake is on) of the brake 13 of the working vehicle 1 included in the manipulation information indicated by the line K by a predetermined value or more (that is, the brake positions are not the same), the controller 31 provides a notification indicating the deviation of the brake position (for example, "please turn on the brake 13") by outputting sound and/or by displaying the line K in a fourth display pattern (for example, displaying the line K with higher luminance than usual).

When the operating position (for example, the raised position) of the working device 2 remotely manipulated deviates from the operating position (the lowered position) of the working device 2 included in the manipulation information indicated by the line K by a predetermined value or more (that is, the operating positions are not the same), the controller 31 provides a notification indicating the deviation of the operating position (for example, "please change the operating position of the working device 2 to the lowered position.") by outputting sound and/or by displaying the line K in a fifth display pattern (for example, flashing with high luminance).

The remote device 30 of the fifth variation includes the notifier 36 to provide a notification indicating the deviation from the line K. When the working vehicle 1 remotely manipulated by the remote manipulator 35 deviates from the line K, the controller 31 causes the notifier 36 to provide a notification indicating the deviation from the line K, and when the manipulation information used to remotely manipulate the working vehicle deviates from the manipulation information obtained when the working vehicle 1 was actually operated in the past, the controller 31 causes the notifier 36 to provide a notification indicating the deviation of the manipulation information. With this configuration, it is possible to provide a notification indicating the deviation to a human remote manipulator when the working vehicle 1 remotely operated deviates from the line K while traveling. Furthermore, it is possible to provide a notification indicating the deviation of the manipulation information when the manipulation information used to remotely operate the working vehicle 1 deviates from the manipulation information indicated by the line K. This makes it possible to allow a human manipulator to follow the travel route and content of the manipulation based on the line K as a guideline.

When the working vehicle 1 deviates from the line K, the notifier 36 provides a notification indicating the deviation from the line K by changing the manner in which the line K is displayed to a manner different from the normal one and/or by outputting the sound of the notification. With this configuration, it is possible, when the working vehicle 1 remotely operated deviates from the line K while traveling, to provide a notification indicating the deviation to a human remote manipulator by changing the manner in which the line K is displayed to a manner different from the normal one and/or by outputting the sound of the notification. This makes it possible to allow the human remote manipulator to follow the line K as a guideline.

When the working vehicle 1 deviates from the line K, the notifier 36 may provide a notification indicating the deviation from the line K by changing the force required to operate the remote manipulator 35 to a greater force than usual. With this configuration, it is possible to, when the working vehicle 1 remotely operated deviates from the line K while traveling, provide a notification indicating the deviation to a human remote manipulator by changing the force required to operate the remote manipulator 35 to a greater force than usual. This makes it possible to allow the human remote manipulator to follow the line K as a guideline.

### Sixth Variation

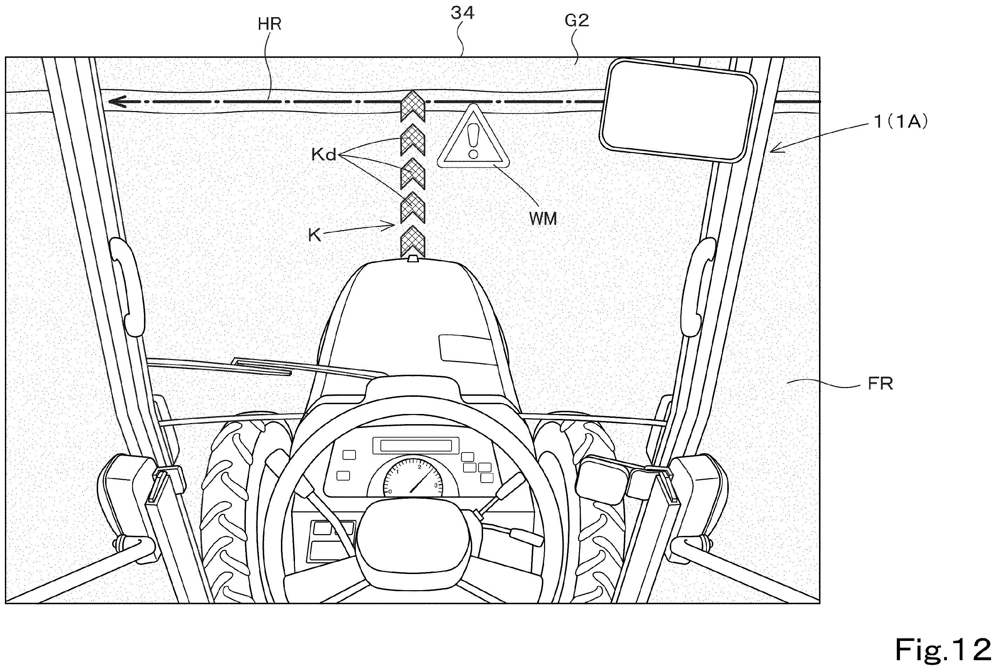

As show in FIG. 12, the remote device 30 of the sixth variation is different from the remote device 30 of the above-described example embodiments and the first to fifth variations in that it is possible to predict a risk relating to other moving bodies (for example, bicycles, pedestrians, other working vehicles, etc.) when remotely operating the working vehicle 1.

The storing device 32 stores, in advance, the informative information in which a past route HR traveled by a moving body other than the working vehicle 1 and warning information WM are associated with each other. Examples of the past route HR include a continuous route traveled by some other moving body (for example, a bicycle, a pedestrian, another working vehicle or the like) actually detected by the sensing assembly 25 of the working vehicle 1, the route created by subjecting fragments of sensing information detected by the sensing assembly 25 to interpolation, a route registered in advance by a human remote manipulator, a cautioned or dangerous route provided from an external server, and the like. The warning information WM includes information (information via sound, displayed information and/or the like) such as a characters, figures, and/or symbols indicating the warning.

As shown in FIG. 12, when the working vehicle 1 remotely manipulated is positioned within a predetermined distance from the past route HR traveled by a moving body, the controller 31 causes the display 34 to display the past route HR traveled by the moving body and the warning information WM on the remote operation screen G2. The controller 31 may cause the display 34 to display the past route HR traveled by the moving body and/or the warning information WM on the remote operation screen G2.

With the remote device 30 of the sixth variation, the storing device 32 records the past route HR traveled by a moving body other than the working vehicle 1 (for example, a bicycle, a pedestrian, another working vehicle or the like), in addition to the line K of the working vehicle 1 (subject working vehicle 1A), and the controller 31, when the working vehicle 1 remotely manipulated approaches the past route HR traveled by the moving body, causes the display 34 to display at least one of the past route HR traveled by the moving body or the warning information WM on the remote operation screen G2, making it possible to provide a notification indicating the danger about the moving bodies other than the working vehicle 1 in advance. For example, at a T-junction passed by many vehicles, a narrow road passed by many pedestrians or the like, it is possible to predict that there may be many moving bodies and/or the vehicle may contact the moving bodies, and thus possible to improve the safety of the remote manipulation.

When the working vehicle 1 is in the vicinity of the position on the line K that is for operation of the working device 2, the controller 31 may cause the notifier 36 to provide a notification indicating that the working vehicle 1 is at the position for operation of the working device 2. The controller 31 is configured or programmed to determine the position for operation of the working device 2 based on the manipulation information included in the actual travel information JA stored in the storage table TB1. For example, when the position for operation of the working device 2 is a location at which the position of the working device 2 is to be changed, the controller 31 defines, in advance, that a position PW1 shown in FIG. 6 is a position at witch the working device 2 is to be lowered and a position PX1 shown in FIG. 6 is a position at which the working device 2 is to be raised. The controller 31 may be configured or programmed to, when the working vehicle 1 remotely operated is at the position PW1 or in the vicinity of the position PW1, cause the notifier 36 to output the voice indicating that "the working vehicle 1 is in the vicinity of the position for operation to lower the working device 2." or cause the display 34 to display the notification. The controller 31 may cause the notifier 36 to provide a notification indicating the operating position relating to the travel speed, the shift position or the brake position, or cause the display 34 to display a notification of such operating positions.

With this configuration, when the working vehicle 1 remotely operated is in the vicinity of the position for operation of the working device 2 (for example, when the working vehicle 1 is in the vicinity of the position at which the implement is to be raised, or the like), it is possible to provide a notification (by displaying the notification on the screen, outputting the notification via sound or the like) to a human remote manipulator in advance. This makes it possible to improve the assurance of the control.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Working vehicle
- 2: Working device
- 5: Transmission
- 9: Cabin (protection structure)
- 10: Operator's seat
- 13: Brake
- 21: In-vehicle communicator
- 24: Position detector
- 25c: Camera (imager)
- 25c1: Internal camera (imager)
- 30: Remote device
- 31: Controller
- 32: Storing device
- 33: Communicator
- 34: Display
- 35: Manipulator
- 70: Display terminal
- 100: Remote manipulation system K Line

## Claims

1. A remote device comprising:
a remote manipulator to remotely manipulate a working vehicle;
a display to display an image of an area in a direction of travel of the working vehicle captured during remote manipulation; and
a controller configured or programmed to cause the display to display actual travel information at least during remote manipulation of the working vehicle.

2. The remote device according to claim 1, wherein the actual travel information includes information indicating a route actually traveled in a past by the working vehicle manually operated or automatically operated.

3. The remote device according to claim 2, wherein the actual travel information is not information relating to a route and manipulation of the working vehicle remotely manipulated currently by a human remote manipulator, but is information relating to a route and manipulation relating to another vehicle other than the working vehicle remotely manipulated currently.

4. The remote device according to claim 3, wherein information relating to a route and manipulation relating to a manual operation included in the actual travel information is information relating to a route and manipulation obtained when the other vehicle was manually operated by a driver in the other vehicle or when the other vehicle was remotely operated manually by the human remote manipulator not in the other vehicle.

5. The remote device according to claim 4, wherein
the display is operable to display the captured image on a remote operation screen; and
the controller is configured or programmed to display a path in a superimposed manner on the captured image on the remote operation screen, the path being an actual travel route which was passed by the manual operation and which is included in the actual travel information.

6. The remote device according to claim 5, further comprising a memory and/or a storage to store one or more pieces of the actual travel information; wherein
the controller is configured or programmed to, based on a selection instruction from the human remote manipulator, select one of the one or more pieces of actual travel information stored in the memory and/or the storage and cause the display to display, as the path, a route indicated by the selected one of the one or more pieces of actual travel information on the remote operation screen.

7. The remote device according to claim 5, further comprising:
a memory and/or a storage to store one or more pieces of the actual travel information; and
a communicator to receive position information relating to the working vehicle and the captured image; wherein
each of the one or more pieces of actual travel information includes information in which manipulation information obtained when the working vehicle or the other vehicle was actually operated and position information relating to the working vehicle or the other vehicle are associated with each other; and
the controller is configured or programmed to, when the remote manipulator remotely manipulates the working vehicle:
select, from the memory and/or the storage, one of the one or more pieces of actual travel information that is associated with a target range including a position indicated by current position information relating to the working vehicle received by the communicator; and
cause the display to display, as the path, the actual travel route indicated by the selected one of the one or more pieces of actual travel information on the remote operation screen.

8. The remote device according to claim 1, wherein
the captured image is an image of the area in the direction of travel of the working vehicle captured by an imager provided inside or outside a protection structure surrounding an operator's seat provided on the working vehicle.

9. The remote device according to claim 5, further comprising:
a memory and/or a storage to store one or more pieces of the actual travel information including respective one or more actual travel routes; wherein
the controller is configured or programmed to:
select one of the one or more actual travel routes stored in the memory and/or the storage based on priority information; and
cause the display to display the selected one of the one or more actual travel routes as the path on the remote operation screen.

10. The remote device according to claim 9, wherein
the memory and/or the storage is operable to store a plurality of the pieces of actual travel information; and
the controller is configured or programmed to:
cause the display to display a latest one of the plurality of pieces of actual travel information stored in the memory and/or the storage as a first path with a first transparency level; and
cause the display to display, on the remote operation screen, one or more of the plurality of pieces of actual travel information that are other than the latest one of the plurality of pieces of actual travel information as a second path with a second transparency level, the second transparency level being higher than the first transparency level.

11. A remote manipulation system comprising:
a working vehicle; and
the remote device according to any one of claims 1 to 10, wherein
the working vehicle includes:
a position detector to detect a position of the working vehicle;
an imager to capture an image of an area in a direction of travel of the working vehicle; and
an in-vehicle communicator to transmit position information indicating the position detected by the position detector and the captured image captured by the imager such that the position information and the captured image are associated with each other;
the remote device includes a communicator to receive the position information and the captured image; and
the controller is configured or programmed to cause the display to display actual travel information at least during remote manipulation of the working vehicle.
